(19) Europäisches Patentamt
European Patent Office
Office européen des brevets

(11) **EP 4 262 268 A1**

(12) **EUROPEAN PATENT APPLICATION**
published in accordance with Art. 153(4) EPC

(43) Date of publication:
**18.10.2023 Bulletin 2023/42**

(21) Application number: **20967619.6**

(22) Date of filing: **30.12.2020**

(51) International Patent Classification (IPC):
**H04W 28/02** *(2009.01)*     **H04W 28/24** *(2009.01)*

(52) Cooperative Patent Classification (CPC):
**H04W 28/02; H04W 28/24**

(86) International application number:
**PCT/CN2020/141751**

(87) International publication number:
**WO 2022/141279 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **XIN, Yang**
  **Shenzhen, Guangdong 518129 (CN)**
• **CHONG, Weiwei**
  **Shenzhen, Guangdong 518129 (CN)**
• **WU, Xiaobo**
  **Shenzhen, Guangdong 518129 (CN)**
• **YAN, Yali**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **METHOD FOR DETERMINING SERVICE EXPERIENCE MODEL, AND COMMUNICATION APPARATUS**

(57)     Embodiments of this application provide a method for determining a service experience model and a communication apparatus. The method includes: A data analysis network element obtains first association information corresponding to a first dataset, where the first dataset includes data of a service on a core network element. The data analysis network element obtains a second dataset based on the first association information. The data analysis network element determines a fourth dataset based on first information and the second dataset, where the fourth dataset is a subset or all of the second dataset, and the first information includes capability information of the first device and/or capability information of the data analysis network element. The data analysis network element determines a service experience model of the service based on the fourth dataset. In this solution, the data analysis network element obtains the data of the service of a terminal device on the core network element, performs data alignment with the first device, and then performs model training based on the aligned data to obtain an accurate service experience model. The data analysis network element does not need to obtain data of the service of the terminal device on the first device.

An NWDAF obtains first association information corresponding to a first dataset — 701

The NWDAF obtains a second dataset based on the first association information — 702

The NWDAF determines a fourth dataset based on first information and the second dataset — 703

The NWDAF determines a service experience model of a service based on the fourth dataset — 704

FIG. 7

**Description**

**TECHNICAL FIELD**

Embodiments of this application relate to the field of communication technologies, and in particular, to a method for determining a service experience model and a communication apparatus.

**BACKGROUND**

In 5th generation (5th generation, 5G) network communication, service data of a terminal device is distributed in a core network element, and is also distributed in an access network device and/or a third-party device.

To evaluate service experience, model training needs to be performed based on the service data of the terminal device distributed on different devices or network elements, to obtain a service experience model, and service experience is evaluated based on the service experience model.

In an implementation method, a data analysis network element in a core network performs model training based on the service data of the terminal device distributed on different devices or network elements. However, based on a data confidentiality requirement, the data analysis network element cannot obtain the complete data on the core network element, the access network device, and the third-party device. As a result, model training cannot be accurately performed.

**SUMMARY**

Embodiments of this application provide a method for determining a service experience model and a communication apparatus, to accurately determine a service experience model of a service.

According to a first aspect, an embodiment of this application provides a method for determining a service experience model. The method includes: A data analysis network element obtains first association information corresponding to a first dataset, where the first dataset includes data of a service on a core network element. The data analysis network element obtains a second dataset based on the first association information, where the second dataset includes data corresponding to second association information in the first dataset, the second association information is an intersection of the first association information and third association information, the third association information corresponds to a third dataset, and the third dataset includes data of the service on a first device. The data analysis network element determines a fourth dataset based on first information and the second dataset, where the fourth dataset is a subset or all of the second dataset, and the first information includes capability information of the first device and/or capability information of the data analysis network element. The data analysis network element determines a service experience model of the service based on the fourth dataset.

Based on the solution, the data analysis network element obtains the data of the service of a terminal device on the core network element, performs data alignment with the first device, and then performs model training based on the aligned data to obtain an accurate service experience model. The data analysis network element does not need to obtain data of the service of the terminal device on the first device.

In a possible implementation method, the fourth dataset includes a training set, the training set corresponds to fourth association information, and that the data analysis network element determines a service experience model of the service based on the fourth dataset includes: The data analysis network element obtains the training set based on the fourth association information and the fourth dataset. The data analysis network element determines at least one candidate service experience model based on the training set. The data analysis network element determines the service experience model of the service in the at least one candidate service experience model.

In a possible implementation method, the fourth dataset further includes a verification set, the verification set corresponds to fifth association information, and that the data analysis network element determines the service experience model of the service in the at least one candidate service experience model includes: The data analysis network element obtains the verification set based on the fifth association information and the fourth dataset. The data analysis network element determines, based on the verification set, a verification result corresponding to the at least one candidate service experience model. The data analysis network element determines the service experience model of the service based on the verification result corresponding to the at least one candidate service experience model.

In a possible implementation method, the fourth dataset further includes a test set, the test set corresponds to sixth association information, and the method further includes: The data analysis network element obtains the test set based on the sixth association information and the fourth dataset. The data analysis network element determines a test result of the service experience model of the service based on the test set.

In a possible implementation method, the data analysis network element sends, to the first device, the fourth association information corresponding to the training set.

In a possible implementation method, the data analysis network element sends a first request to a second device, where the first request carries identification information of the first device, and the first request is used to request the first dataset. The data analysis network element receives the first dataset from the second device.

In a possible implementation method, that the data analysis network element obtains a second dataset based on the first association information includes: The data analysis network element sends the first association information to the first device. The data analysis network element receives the second association information from the first device. The data analysis network element obtains the second dataset based on the second association information and the first dataset.

In a possible implementation method, that the data analysis network element obtains a second dataset based on the first association information includes: The data analysis network element receives the third association information from the first device. The data analysis network element determines the second association information based on the third association information and the first association information. The data analysis network element obtains the second dataset based on the second association information and the first dataset.

In a possible implementation method, that a data analysis network element obtains first association information corresponding to a first dataset includes: The data analysis network element sends a second request to a second device, where the second request carries identification information of the first device, and the second request is used to request the first association information corresponding to the first dataset. The data analysis network element receives the first association information from the second device.

In a possible implementation method, that the data analysis network element obtains a second dataset based on the first association information includes: The data analysis network element determines the second association information based on the first association information. The data analysis network element sends a third request to the second device, where the third request carries the second association information, and the third request is used to request the second dataset. The data analysis network element receives the second dataset from the second device.

Based on the solution, when a data volume of the second dataset is less than a data volume of the first dataset, according to the method, a data transmission volume can be reduced, thereby reducing data transmission pressure.

In a possible implementation method, the data analysis network element sends a fourth request to a network element storage function network element, where the fourth request is used to request address information of the second device. The data analysis network element receives the address information of the second device from the network element storage function network element.

In a possible implementation method, the second device is a data analysis network element that supports a data lake function, is a data analysis network element that supports a data collection and coordination function, or is a data analysis network element that supports a data collection function.

In a possible implementation method, the first device is an access network device or a service device.

In a possible implementation method, the first association information includes the following information: the identification information of the first device, identification information allocated by the first device to a terminal device, and a timestamp.

In a possible implementation method, the identification information allocated by the first device to the terminal device is identification information allocated by the first device to the terminal device on a first interface, and the first interface is an interface between the first device and the core network element.

In a possible implementation method, the data analysis network element determines a service experience model of the service in a vertical federated learning manner based on the fourth dataset.

According to a second aspect, an embodiment of this application provides a communication apparatus. The apparatus may be a data analysis network element, or may be a chip used in a data analysis network element. The apparatus has a function of implementing the method in any one of the first aspect or the possible implementation methods of the first aspect. The function may be implemented by hardware, or may be implemented by hardware by executing corresponding software. The hardware or the software includes one or more modules corresponding to the function.

According to a third aspect, an embodiment of this application provides a communication apparatus. The communication apparatus includes a processor, where the processor is coupled to a memory, the memory is configured to store a program or instructions, and when the program or the instructions are executed by the processor, the apparatus is enabled to implement the method in any one of the first aspect or the possible implementation methods of the first aspect. The memory may be located inside the apparatus, or may be located outside the apparatus. There are one or more processors.

According to a fourth aspect, an embodiment of this application provides a communication apparatus. The communication apparatus include units or means (means) configured to perform the steps of the method in any one of the first aspect or the possible implementation methods of the first aspect.

According to a fifth aspect, an embodiment of this application provides a communication apparatus. The communication apparatus includes a processor and an interface circuit. The processor is configured to: control the interface circuit to communicate with another apparatus, and perform the method in any one of the first aspect or the possible implementation methods of the first aspect. There are one or more processors.

According to a sixth aspect, an embodiment of this application further provides a computer-readable storage medium. The computer-readable storage medium includes instructions, where when the instructions run on a computer, the computer is enabled to perform the method in any one of the first aspect or the possible implementation methods of the first aspect.

According to a seventh aspect, an embodiment of this application further provides a computer program product. When the computer program product runs on a computer, the computer is enabled to perform the method in any one of the first aspect or the possible implementation methods of the first aspect.

According to an eighth aspect, an embodiment of this application further provides a chip system. The chip system includes a processor, where the processor is coupled to a memory, the memory is configured to store a program or instructions, and when the program or the instructions are executed by the processor, the chip system is enabled to implement the method in any one of the first aspect or the possible implementation methods of the first aspect. The memory may be located inside the chip system, or may be located outside the chip system. There are one or more processors.

**BRIEF DESCRIPTION OF DRAWINGS**

FIG. 1 is a schematic diagram of a 5G network architecture to which an embodiment of this application is applicable;
FIG. 2 is a schematic diagram of an NWDAF-based service experience evaluation procedure;
FIG. 3 is a schematic diagram of a vertical federated learning training process;
FIG. 4 is a schematic diagram of dataset division;
FIG. 5 is a schematic diagram of an NWDAF function decomposition architecture;
FIG. 6 is a schematic diagram of obtaining, by an NWDAF, data of UE through pairwise association;
FIG. 7 shows a method for determining a service experience model according to an embodiment of this application;
FIG. 8 shows a method for determining a service experience model according to an embodiment of this application;
FIG. 9 shows a method for determining a service experience model according to an embodiment of this application;
FIG. 10 shows a method for determining a service experience model according to an embodiment of this application;
FIG. 11 shows a communication apparatus according to an embodiment of this application; and
FIG. 12 shows another communication apparatus according to an embodiment of this application.

**DESCRIPTION OF EMBODIMENTS**

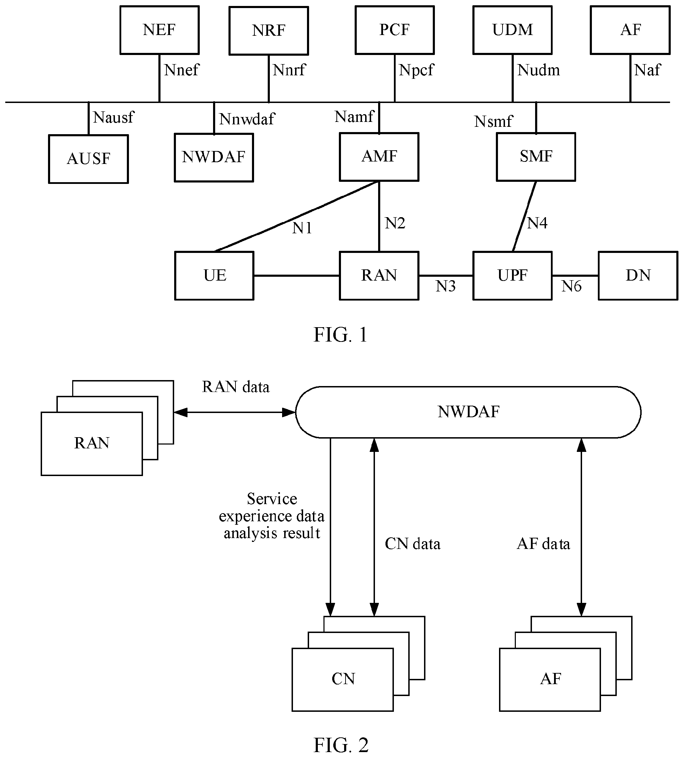

FIG. 1 is a schematic diagram of a 5G network architecture to which an embodiment of this application is applicable. The 5G network architecture shown in FIG. 1 includes three parts: a terminal device, a data network (data network, DN), and an operator network. The following briefly describes functions of some of network elements.

The operator network may include one or more of the following network elements: an authentication server function (Authentication Server Function,AUSF) network element, a network exposure function (network exposure function, NEF) network element, a policy control function (Policy Control Function, PCF) network element, a unified data management (unified data management, UDM) network element, a unified data repository (Unified Data Repository, UDR) network element, a network repository function (Network Repository Function, NRF) network element, an access and mobility management function (Access and Mobility Management Function, AMF) network element, a session management function (session management function, SMF) network element, a radio access network (Radio Access Network, RAN) device user plane function (user plane function, UPF) network element, a network data analytics function (Network Data Analytics Function, NWDAF) network element, and the like. In the operator network, a part other than a radio access network may be referred to as a core network. In a possible implementation method, the operator network further includes an application function (Application Function, AF) network element.

In a specific implementation, the terminal device in this embodiment of this application may be a device configured to implement a wireless communication function. The terminal device may be user equipment (user equipment, UE) in a 5G network or a future evolved public land mobile network (public land mobile network, PLMN), an access terminal, a terminal unit, a terminal station, a mobile station, a mobile console, a remote station, a remote terminal, a mobile device, a wireless communication device, a terminal agent, a terminal device, or the like. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal may be mobile or fixed.

The terminal device may establish a connection to the operator network through an interface (for example, NI) provided by the operator network, and use a service such as data and/or voice provided by the operator network. The terminal device may further access the DN by using the operator network, and use an operator service deployed on the DN and/or a service provided by a third party. The third party may be a service party other than the operator network and the terminal device, and may provide a service such as another data and/or voice for the terminal device. A specific representation form of the third party may be specifically determined based on an actual application scenario, and is not limited herein.

As an access network element, the RAN is a subnet of the operator network, and is an implementation system between a service node and a terminal device in the operator network. If the terminal device is to access the operator network, the terminal device first passes through the RAN, and then may be connected to a service node in the operator network by using the RAN. A RAN device in this application is a device that provides a wireless communication function for the terminal device, and the RAN device is also referred to as an access network device. The RAN device in this application includes but is not limited to: a next-generation base station (g nodeB, gNB) in 5G, an evolved node B (evolved node B, eNB), a radio network controller (radio network controller, RNC), a node B (node B, NB), a base station controller (base station controller, BSC), a base transceiver station (base transceiver station, BTS), a home base station (for example, a home evolved nodeB, or home nodeB, HNB), a baseband unit (baseBand unit, BBU), a transmission and receiving point (transmitting and receiving point, TRP), a transmitting point (transmitting point, TP), a mobile switching center, and the like.

The AMF network element mainly performs functions such as mobility management and access authentication/authorization. In addition, the AMF network element is also responsible for transferring a user policy between UE and the PCF.

The SMF network element mainly performs functions such as session management, execution of a control policy delivered by the PCF, selection of the UPF, and UE Internet Protocol (internet protocol, IP) address assignment.

The UPF network element functions as an interface UPF between the UPF network element and a data network and completes functions such as user plane data forwarding, session/flow-level-based charging statistics, and bandwidth limiting.

The UDM network element is mainly responsible for functions such as managing subscription data and user access authorization.

The UDR is mainly responsible for an access function of data of types such as subscription data, policy data, and application data.

The NEF network element is mainly configured to support opening of a capability and an event.

The AF network element mainly transfers a requirement of an application side for a network side, for example, a quality of service (Quality of Service, QoS) requirement or user status event subscription. The AF may be a third-party functional entity, or may be an application service deployed by an operator, for example, an IP multimedia subsystem (IP Multimedia Subsystem, IMS) voice call service.

The PCF network element is mainly responsible for policy control functions such as charging based on a session and a service flow level, QoS bandwidth guarantee, mobility management, and UE policy decision.

The NRF network element may be configured to provide a network element discovery function and provide, based on a request from another network element, network element information corresponding to a network element type. The NRF also provides a network element management service, such as network element registration, update, and deregistration, and network element status subscription and push.

The AUSF network element is mainly responsible for authenticating a user to determine whether to allow the user or a device to access a network.

The NWDAF network element is mainly configured to collect network data (including one or more pieces of terminal device data, RAN device data, core network data, and third-party application data) and provide a network data analysis service, and may output a data analysis result, for the network, a network administrator, and an application to make a policy decision. The NWDAF may perform data analysis by using a machine learning model. In 3GPP Release 17, functions of the NWDAF are decomposed into a data collection function (or a data collection logical function (data collection function)), a model training function (or a machine learning model training logical function (machine learning model training logical function)), and a model inference function (or an analytics logical function (analytics logical function)). When the data collection function, the training function, and the inference function are separated, a data collection function, a training function, and an inference function of a same model can be separately deployed in different NWDAF instances. An NWDAF (which may be referred to as a data collection NWDAF, a data lake (data lake), or a data repository function network element (data repository function, DRF)) that deploys the data collection function may be configured to collect data from the terminal device, the RAN device, the core network device, and the third-party application. An NWDAF (which may be referred to as a training NWDAF) that deploys the training function may perform model training based on collected data to obtain a trained model. An NWDAF (which is referred to as an inference NWDAF for short) that deploys the inference function performs model inference by obtaining a model provided by the training NWDAF, and provides a data analysis service. The NWDAF may be an independent network element or set together with another network element. For example, the NWDAF is set in the PCF network element.

The DN is a network outside the operator network. The operator network may access a plurality of DNs. A plurality of services may be deployed on the DN to provide a service such as data and/or voice for the terminal device. For example, the DN is a private network of a smart factory. A sensor installed in a workshop of the smart factory may be a terminal device. A control server of the sensor is deployed in the DN, and the control server may provide a service for the sensor. The sensor may communicate with the control server, obtain an instruction of the control server, transmit collected sensor data to the control server based on the instruction, and the like. For another example, the DN is an internal office network of a company, a mobile phone or a computer of an employee of the company may be a terminal device, and the mobile phone or the computer of the employee may access information, a data resource, and the like on the internal office network of the company.

In FIG. 1, Nnwdaf, Nausf, Nnef, Npcf, Nudm, Naf, Namf, Nsmf, N1, N2, N3, N4, and N6 are interface sequence numbers. For meanings of the interface sequence numbers, refer to meanings defined in the 3GPP standard protocol. This is not limited herein.

It should be noted that in this embodiment of this application, the data analysis network element may be the NWDAF network element shown in FIG. 1, or may be another network element in a future communication system that has a function of the NWDAF network element in this application. The mobility management network element may be the AMF network element shown in FIG. 1, or may be another network element in the future communication system that has a function of the AMF network element in this application. The policy control network element may be the PCF network element shown in FIG. 1, or may be another network element in the future communication system that has a function of the PCF network element in this application. The user plane network element may be the UPF network element shown in FIG. 1, or may be another network element in the future communication system that has a function of the UPF network element in this application. The application function network element may be the AF network element shown in FIG. 1, or may be another network element in the future communication system that has a function of the AF network element in this application. The access network device may be the RAN device shown in FIG. 1, or may be another network element in the future communication system that has a function of the RAN device in this application.

For ease of description, in this embodiment of this application, an example in which the data analysis network element is an NWDAF network element, the mobility management network element is an AMF network element, the policy control network element is a PCF network element, the user plane network element is a PCF network element, the application function network element is an AF network element, and the access network device is a RAN device is used for description. In addition, the NWDAF network element is further divided into a data lake (also referred to as a data collection NWDAF), a training NWDAF network element, and an inference NWDAF network element. An example in which the terminal device is UE is used for description.

To facilitate understanding of the solutions in the embodiments of this application, the following first describes technologies related to the embodiments of this application.

1. Cross-domain data analysis

A service provider (such as a service device or an AF) is most concerned about service experience of a service of the service provider in a 5G network, and can accurately understand a service feature of the service provider. Therefore, the service provider can accurately measure the service experience to effectively monitor service quality. However, there is no service experience evaluation mechanism in the 5G network. A fixed QoS parameter is used to try to guarantee rich and varied 5G services. As a result, a service experience requirement and a network resource cannot be accurately matched.

FIG. 2 is a schematic diagram of an NWDAF-based service experience evaluation procedure. Parameters of three domains: a RAN device, a core network (CN), and a service provider jointly affect service experience. An NWDAF determines a service experience data analysis result of a service flow, and sends the service experience data analysis result to a PCF. The PCF determines, based on a relationship between the service experience data analysis result and a service experience requirement, whether service experience of the service flow can be satisfied. If the service experience of the service flow cannot be satisfied, the PCF may re-determine a QoS parameter of the service flow. Based on a new QoS parameter, a network may improve the service experience of the service flow, so that the service experience data analysis result obtained by the NWDAF based on new service experience of the service flow can meet the service experience requirement.

Table 1 shows examples of parameters that affect service experience.

**Table 1**

| Data source | Data |
|---|---|
| AF | Service experience (Service Experience) |
| | Buffer size (Buffer size) at an application layer corresponding to a service flow |
| | Private data |
| UPF | QoS flow bit rate (QoS flow Bit Rate) |
| | QoS flow packet delay (QoS flow Packet Delay) |
| | QoS flow packet error rate (QoS flow Packet Error Rate) |
| | Private data |
| RAN | Reference signal received power (reference signal received power, RSRP) |
| | Reference signal received quality (reference signal received quality, RSRQ) |
| | Signal to interference plus noise ratio (Signal to interference plus noise ratio, SINR) |
| | Private data |
| AMF | Location of UE |
| | Private data |

Assuming that all data in Table 1 may be summarized to the NWDAF, the NWDAF may obtain, through training, a relationship model between the service experience and one or more pieces of data of the RAN, data of the core network (CN), and data of the AF, that is, a service experience model. Based on the service experience model, the NWDAF may determine the service experience data analysis result corresponding to new data of the RAN, the core network, and the AF. Linear regression is used as an example. The service experience model is as follows:

$$h(x) = w_0 x_0 + w_1 x_1 + w_2 x_2 + w_3 x_3 + w_4 x_4 + w_5 x_5 \ldots + w_D x_D \quad \text{(Formula 1)}$$

where h(x) represents the service experience. Generally, a larger value of h(x) indicates better service experience, $x_0$ is 1, $x_i$ ($i$ = 1, 2, ..., $D$) indicates data of the RAN, the CN, and the AF, D is a dimension of the data, and $w_i$ ($i$ = 0, 1, 2, ..., $D$) is a weight of each piece of data that affects service experience.

In fact, the private data of the RAN, the CN, and the AF cannot be centralized in a same NWDAF for centralized training. This is because the private data of the RAN, the CN, and the AF comes from different domains. The private data of the RAN comes from an access network domain, the private data of the CN comes from a core network domain, and the private data of the AF comes from a third-party device domain.

To train data from different domains, distributed model training may be implemented through vertical federated learning (Vertical Federated Learning, VFL). As a new machine learning technology, the VFL resolves model training and inference when participants are unwilling to share original data, and is applicable to a case in which training sample identifications (identification, ID) of the participants overlap a lot, but data features of the participants overlap a little. In the VFL, different data features of a common sample of a plurality of participants are combined to perform federated learning, that is, training data of each participant is vertically divided. Therefore, the federated learning is referred to as vertical federated learning.

The service experience model based on vertical federated learning is as follows:

$$h(x_i) = \Theta_A x_i^A + \Theta_B x_i^B + \Theta_C x_i^C + \Theta_D x_i^D \quad \text{(Formula 2)}$$

where $x_i$ represents an $i$th piece of sample data. $x_i^A$ is private data distributed on the RAN in the $i$th piece of sample data, $x_i^B$ is private data distributed on the CN in the $i$th piece of sample data, and $x_i^C$ is private data distributed on the AF in the $i$th piece of sample data. $x_i^D$ is common data actively reported by the RAN, the CN, and the AF in the $i$th

sample data (for example, the RSRP/RSRQ/SINR, the QoS flow Bit rate/QoS flow packet delay/QoS flow packet error rate, and the buffer size in Table 1). $\Theta_A$, $\Theta_B$, $\Theta_C$, and $\Theta_D$ are model parameters respectively corresponding to $x_i^A$, $x_i^B$, $x_i^C$, and $x_i^D$.

It should be noted that $x_i^A$, $x_i^B$, $x_i^C$, and $x_i^D$ are data vectors including one or more pieces of data. Correspondingly, $\Theta_A$, $\Theta_B$, $\Theta_C$, and $\Theta_D$ are parameter vectors including one or more model parameters.

2. Training process of vertical federated learning

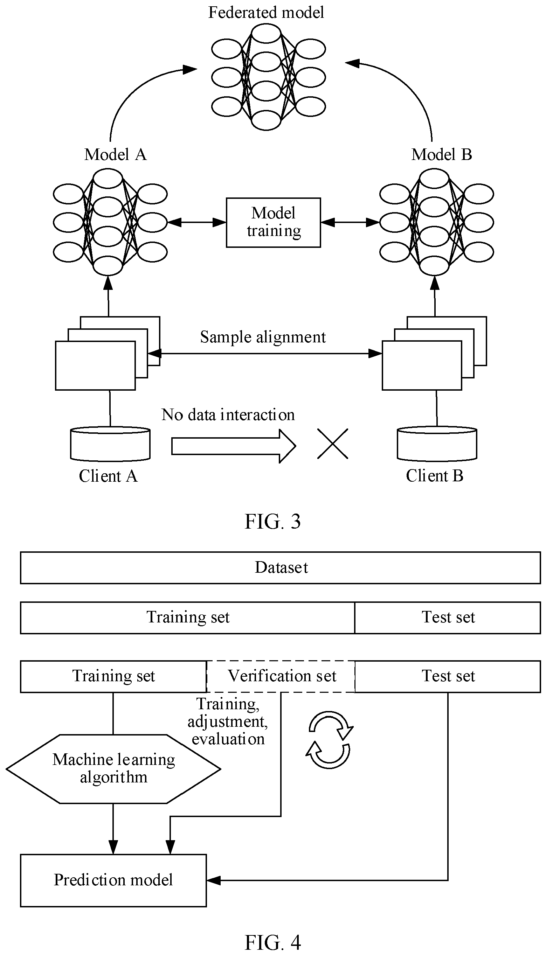

Using a linear regression algorithm as an example, a process of vertical federated learning training is shown in FIG. 3.

A client A (Client A) has a dataset $\{x_i^A\}_i \in D_A$, and a client B (Client B) has a dataset $\{x_i^B, y_i\}_i \in D_B$. $y_i$ is label data. A model to be trained is as follows:

$$h(x_i) = \Theta_A x_i^A + \Theta_B x_i^B \quad \text{(Formula 3)}$$

It is assumed that an objective function for linear regression is as follows:

$$\min_{\Theta_A, \Theta_B} L \quad \text{(Formula 4)}$$

where L is a loss function, and is specifically as follows:

$$L = \sum_i \left\| \Theta_A x_i^A + \Theta_B x_i^B - y_i \right\|^2 + \frac{\lambda}{2}(\|\Theta_A\|^2 + \|\Theta_B\|^2) \quad \text{(Formula 5)}$$

Because original data $D_A$ on the client A and $D_B$ on the client B cannot be summarized together, training cannot be performed based on a conventional centralized training method, but training may be performed based on a vertical federated training method, as follows:

Make $\mu_i^A = \Theta_A x_i^A$, and $\mu_i^B = \Theta_B x_i^B$. Then, L is transformed as follows:

$$L = \sum_i \left\| \mu_i^A + \mu_i^B - y_i \right\|^2 + \frac{\lambda}{2}(\|\Theta_A\|^2 + \|\Theta_B\|^2) \quad \text{(Formula 6)}$$

Make $L_A = \sum_i ((\mu_i^A)^2) + \frac{\lambda}{2}\|\Theta_A\|^2$, $L_B = \sum_i ((\mu_i^B - y_i)^2) + \frac{\lambda}{2}\|\Theta_B\|^2$, and $L_{AB} = 2\sum_i \mu_i^A (\mu_i^B - y_i)$. Then,

$$L = L_A + L_B + L_{AB} \quad \text{(Formula 7)}$$

Make a residual $d_i = \mu_i^A + \mu_i^B - y_i$. Then, gradients of L with respect to $\Theta_A$ and $\Theta_B$ are as follows:

$$\frac{\partial L}{\partial \Theta_A} = \sum_i d_i x_i^A + \lambda \Theta_A \quad \text{(Formula 8)}$$

$$\frac{\partial L}{\partial \Theta_B} = \sum_i d_i x_i^B + \lambda \Theta_B \quad \text{(Formula 9)}$$

Correspondingly, the model parameters are updated as follows:

$$\Theta_A := \Theta_A + \alpha \frac{\partial L}{\partial \Theta_A} \quad \text{(Formula 10)}$$

$$\Theta_B := \Theta_B + \alpha \frac{\partial L}{\partial \Theta_B} \quad \text{(Formula 11)}$$

Therefore, the training process of vertical federated learning is as follows:

Step 1: The client A and the client B respectively initialize the model parameters $\Theta_A$ and $\Theta_B$.

Step 2: The client A calculates $\mu_i^A$ and $L_A$ based on $\Theta_A$, and then sends a calculation result to the client B.

Step 3: The client B calculates $\mu_i^B$ based on $\Theta_B$, further calculates $d_i$, $L_{AB}$, and $L_B$ based on $\mu_i^A$, $\mu_i^B$, and $y_i$, and finally obtains, through calculation, $L$ based on $L_A$, $L_{AB}$, and $L_B$. The client B sends $d_i$ to the client A.

Step 4: The client A and the client B respectively calculate $\frac{\partial L}{\partial \Theta_A}$ and $\frac{\partial L}{\partial \Theta_B}$ based on $d_i$, and then update the model parameters $\Theta_A$ and $\Theta_B$ based on $\frac{\partial L}{\partial \Theta_A}$ and $\frac{\partial L}{\partial \Theta_B}$.

Step 2 to step 4 are cyclically performed until a model training end condition is met. For example, a quantity of iterations reaches a specified threshold (for example, 10000), or a value of a loss function $L$ is less than a specified threshold (for example, 0.001).

By using the technology, exchange of original data between domains is avoided, and a service experience model can also be obtained through training. After the training ends, for a group of data ( $x_j^A, x_j^B$ ), in an inference phase, the client A and the client B respectively calculate local inference results $\Theta_A x_j^A$ and $\Theta_B x_j^B$ based on the trained model parameters $\Theta_A$ and $\Theta_B$. Then, the client A sends the local inference result $\Theta_A x_j^A$ to the client B, and the client B finally determines an inference result $\Theta_A x_j^A + \Theta_B x_j^B$.

3. Dataset division and NWDAF function decomposition during model training

FIG. 4 is a schematic diagram of dataset division. To avoid an overfitting problem in a training process, during actual training, a dataset needs to be divided into a training set, a verification set, and a test set. The training set is used to obtain, through training based on different algorithms, models corresponding to the algorithms. The verification set is used to verify a result of each model. In addition, in a training process, an algorithm may be continuously updated to adjust a model, a best model may be selected based on a verification result, and finally, a test result of the model is determined based on the test set and the best model.

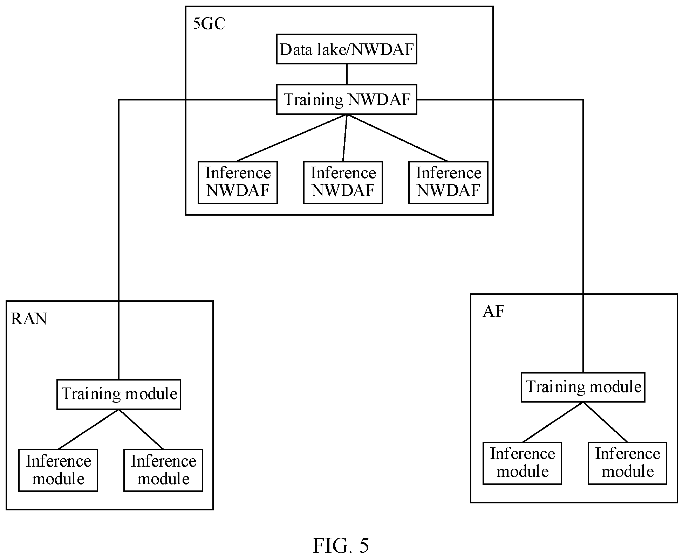

FIG. 5 is a schematic diagram of an NWDAF function decomposition architecture. An NWDAF can be decomposed into a training NWDAF (responsible for model training), an inference NWDAF (responsible for inference of a data analysis result), and a data lake (collecting, managing, and controlling training data or inference data).

4. An NWDAF implements service data analysis through pairwise association

Generally, the NWDAF needs to perform end-to-end per UE (per UE) data analysis between the RAN, the CN, and the AF. Then, the NWDAF needs to consider associating data of the UE distributed on the RAN, the CN, and the AF. The NWDAF may determine the data of the UE through pairwise association of association information. For example, the following idea is used in this embodiment of this application: RAN-AMF-SMF-UPF-AF.

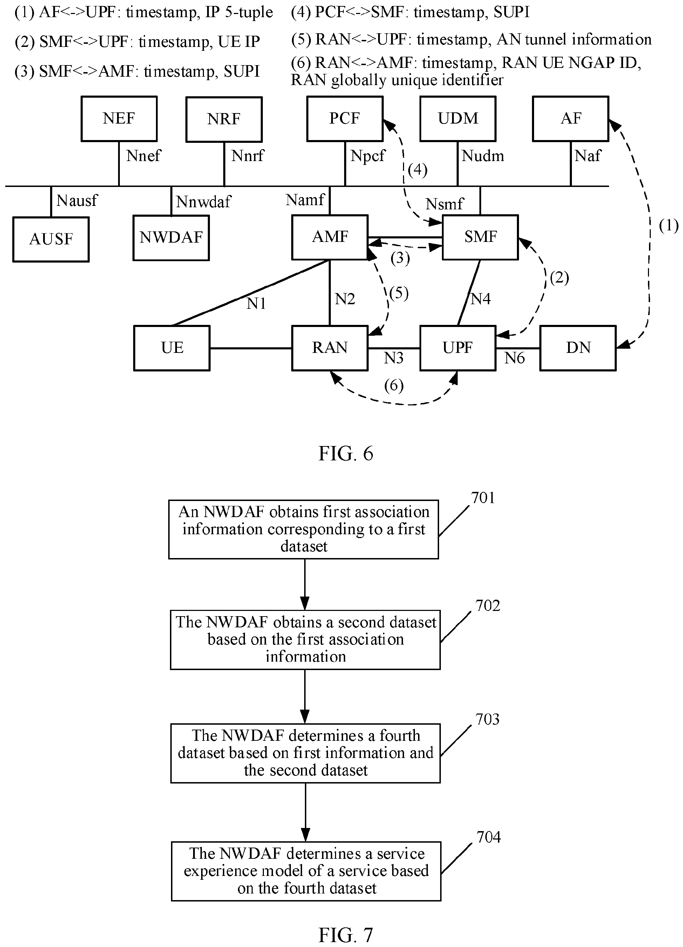

FIG. 6 is a schematic diagram of obtaining, by an NWDAF, data of UE through pairwise association. When the RAN and the AMF report data, the RAN and the AMF both carry a timestamp (Timestamp), a RAN UE NGAP ID allocated to the UE on an N2 interface, and a RAN globally unique identifier (Global RAN Node ID). In other words, each piece of data is identified by using association information, and the association information includes a timestamp, a RAN UE NGAP ID, and a global RAN node ID. The NGAP is short for a next generation application protocol (Next Generation Application Protocol). Therefore, the NWDAF associates data of the UE on the RAN and AMF by using the timestamp, the RAN UE NGAP ID, and the global RAN node ID.

Similarly, the NWDAF associates data of the UE on the RAN and the UPF by using the timestamp and AN tunnel information (AN Tunnel Info), associates data of the UE on the SMF and the PCF by using the timestamp and a subscription permanent identifier (Subscription Permanent Identifier, SUPI), associates data of the UE on the AMF and the SMF by using the timestamp and the SUPI, associate data of the UE on the SMF and the UPF by using the timestamp and a UE IP, and associates data of the UE on the AF and the UPF by using the timestamp and an internet protocol 5-tuple (Internet Protocol 5-tuple, IP 5-tuple).

For example, association information between the RAN and the AMF is represented by a, association information between the AMF and the SMF is represented by b, association information between the SMF and the UPF is represented by c, and association information between the UPF and the AF is represented by d.

Therefore, a format of sample data of the UE collected by the RAN is (a, data of UE).

A format of sample data of the UE collected by the AMF is (a, b, data of UE), and then the AMF reports (a, b, data of UE) to the NWDAF.

A format of sample data of the UE collected by the SMF is (b, c, data of UE), and then the SMF reports (b, c, data of UE) to the NWDAF.

A format of sample data of the UE collected by the UPF is (c, d, data of UE), and then the UPF reports (c, d, data of UE) to the NWDAF.

A format of sample data of the UE collected by the AF is (d, data of UE), and then the AF reports (d, data of UE) to the NWDAF.

The sample data that is received by the NWDAF and that is reported by the AMF, the SMF, the UPF, and the AF is: (a, data of UE), (a, b, data of UE), (b, c, data of UE), (c, d, data of UE), and (d, data of UE). Then, the NWDAF may convert all the formats of the sample data into (a, data of the UE) based on a correspondence between a and b, a correspondence between b and c, and a correspondence between c and d.

An embodiment of this application provides a method for determining a service experience model. The method may be performed by an NWDAF in a core network or a chip used in an NWDAF.

In this embodiment of this application, a first dataset includes data of a service of a terminal device on a core network element. In other words, the first dataset is used to represent a set of the data of the service of the terminal device on the core network element. For example, the core network element herein may be one or more of a UPF, an SMF, an AMF, a PCF, or the like. The obtained data of the core network element may include data of the UPF, data of the AMF, and the like shown in Table 1. First association information is used to associate the first dataset with a third dataset on a first device (which may be an access network device or a service device (also referred to as an AF)). The first association information may be further used to identify data of the first dataset. The first association information corresponds to the first dataset. For example, the first association information may include the following information: identification information of the first device, identification information allocated by the first device to the terminal device, and a timestamp (Timestamp). The identification information allocated by the first device to the terminal device may be identification information allocated by the first device to the terminal device on a first interface, and the first interface is an interface between the first device and the core network element. The first device herein may be an access network device or an AF. An example in which the first device is an access network device is used. The first association information may include: a timestamp, a RAN UE NGAP ID, and a global RAN node ID. The timestamp is a timestamp, the RAN UE NGAP ID is identification information allocated by the access network device to the terminal device, and the global RAN node ID is identification information of the access network device.

In this embodiment of this application, the third dataset includes the data of the service of the terminal device on the first device (which may be an access network device or an AF). In other words, the third dataset is used to represent a set of the data of the service of the terminal device on the first device. For example, the obtained data on the first device may include data of the RAN or data of the AF shown in Table 1. The third dataset and the first dataset correspond to a same service. The third association information is used to associate the third dataset with the first dataset on the NWDAF. The third association information may be further used to identify data of the third dataset. The third association information corresponds to the third dataset. For example, the third association information may include the following information: identification information of the first device, identification information allocated by the first device to the terminal device, and a timestamp (Timestamp). The identification information allocated by the first device to the terminal device may be identification information allocated by the first device to the terminal device on a first interface, and the first interface is an interface between the first device and the core network element. An example in which the first device is an access network device is used. The third association information may include: a timestamp, a RAN UE NGAP ID, and a global RAN node ID. The timestamp is a timestamp, the RAN UE NGAP ID is identification information allocated by the access network device to the terminal device, and the global RAN node ID is identification information of the access network device.

In this embodiment of this application, a second dataset includes data corresponding to second association information in the first dataset, and the second association information is an intersection of the first association information and the third association information. Therefore, the second dataset is a proper subset of the first dataset or the second dataset is the same as the first dataset.

For example, the first dataset includes 10000 pieces of data, and the corresponding first association information is respectively represented as ID-1 to ID-10000. The third dataset includes 9000 pieces of data, and the corresponding third association information is respectively represented as ID-5001 to ID-14000. Therefore, the second dataset includes 5000 pieces of data, and the corresponding second association information is respectively represented as ID-5001 to ID-10000.

In this embodiment of this application, a fourth dataset is a subset of the second dataset, or the fourth dataset is the same as the second dataset. The fourth dataset includes a training set, and the training set corresponds to fourth association information. Optionally, the fourth dataset further includes a verification set and a test set. The verification set corresponds to fifth association information, and the test set corresponds to sixth association information.

FIG. 7 shows a method for determining a service experience model according to an embodiment of this application. The method includes the following steps.

Step 701: An NWDAF obtains first association information corresponding to a first dataset.

Step 702: The NWDAF obtains a second dataset based on the first association information.

Step 703: The NWDAF determines a fourth dataset based on the first information and the second dataset, where the first information includes capability information of a first device and/or capability information of the NWDAF.

The capability information herein includes one or more of computing power of a central processing unit (central processing unit, CPU), a computing power resource of a graphics processing unit (Graphics Processing Unit, GPU), a memory resource, a hard disk resource, a transmission bandwidth resource between the NWDAF and the first device (a RAN device or an AF), or a delay.

Step 704: The NWDAF determines a service experience model of a service based on a fourth dataset.

For example, the NWDAF may perform vertical federated learning based on the fourth dataset, to obtain the service experience model of the service. For example, with reference to FIG. 3, the NWDAF may be the client A or the client B in FIG. 3. For a specific model training method, refer to the foregoing descriptions.

Based on the solution, the NWDAF obtains data of a service of a terminal device on a core network element, performs data alignment with the first device, and then performs model training based on the aligned data to obtain an accurate service experience model. The NWDAF does not need to obtain data of the service of the terminal device on the first device.

In an implementation method, before step 702, the NWDAF may further obtain the first dataset from a second device. For example, the NWDAF sends a first request to the second device. The first request carries identification information of the first device, and the first request is used to request the first dataset. Alternatively, this is understood as that the first request is used to request to obtain service data of the terminal device that is related to the first device and that is on the core network element. Then, the second device then sends the first dataset to the NWDAF.

When the NWDAF obtains the first dataset, in step 702, a method for obtaining the second dataset by the NWDAF may be, for example: The NWDAF sends first association information to the first device. The first device determines second association information based on third association information and the first association information, that is, determines an intersection of the third association information and the first association information as the second association information. Then, the first device sends the second association information to the NWDAF. Then, the NWDAF obtains a second dataset based on the second association information and the first dataset. In other words, the NWDAF obtains data corresponding to the second association information in the first dataset, to form the second dataset.

When the NWDAF obtains the first dataset, in step 702, a method for obtaining the second dataset by the NWDAF may alternatively be, for example: The first device sends third association information to the NWDAF. The NWDAF determines second association information based on the third association information and the first association information. In other words, the NWDAF determines an intersection of the third association information and the first association information as the second association information. Then, the NWDAF obtains a second dataset based on the second association information and the first dataset. In other words, the NWDAF obtains data corresponding to the second association information in the first dataset, to form the second dataset.

In another implementation method, the NWDAF may directly obtain the second dataset from the second device without obtaining the first dataset from the second device. When a data volume of the second dataset is less than a data volume of the first dataset, according to the method, a data transmission volume can be reduced, thereby reducing data transmission pressure. Based on the method, step 701 may be: The NWDAF sends a second request to the second device. The second request carries the identification information of the first device, and the second request is used to request the first association information corresponding to the first dataset. Alternatively, this is understood as that the second request is used to request to obtain association information corresponding to the service data of the terminal device that is related to the first device and that is on the core network element, and then the second device sends the first association information to the NWDAF. After the NWDAF obtains the first association information from the second device, the NWDAF performs association information alignment with the first device. In other words, the NWDAF determines the second association information based on the first association information. For a specific method, refer to the foregoing descriptions. Then, the NWDAF sends a third request to the second device. The third request carries the second association information, and the third request is used to request a second dataset corresponding to the second association information. The second device obtains the second dataset based on the second association information, and sends the second dataset to the NWDAF. In other words, in step 702, the NWDAF determines the second association information based on the first association information, and then obtains the second dataset from the second device based on the second association information.

In an implementation method, based on the foregoing implementation method, before the NWDAF obtains the first association information, the first dataset, or the second dataset from the second device, the NWDAF further sends a fourth request to a network element storage function network element (such as an NRF). The fourth request is used to request address information of the second device. Then, the network element storage function network element sends the address information of the second device to the NWDAF. The second device may be an NWDAF that supports a data lake function (which may also be referred to as a data lake), an NWDAF that supports a data collection coordination function, or an NWDAF that supports a data collection function.

In an implementation method, the fourth dataset includes a training set, and the training set corresponds to fourth association information. In other words, data in the training set is obtained by associating the fourth association information. The training set is a proper subset of the fourth dataset, or the training set is the same as the fourth dataset. The training set is used to obtain, through training based on different algorithms, models corresponding to the algorithms. Therefore, step 704 may be: The NWDAF obtains the training set based on the fourth association information and the fourth dataset, the NWDAF determines at least one candidate service experience model based on the training set, and the NWDAF determines a service experience model of the service in the at least one candidate service experience model. For example, the NWDAF performs model training based on an algorithm 1 and the training set to obtain a candidate service experience model 1, performs model training based on an algorithm 2 and the training set to obtain a candidate service experience model 2, and performs model training based on an algorithm 3 and the training set to obtain a candidate service experience model 3. Then, the NWDAF determines the service experience model of the service in the candidate service experience model 1, the candidate service experience model 2, and the candidate service experience model 3.

In an implementation method, the fourth dataset further includes a verification set, and the verification set corresponds to fifth association information. In other words, data in the verification set is obtained by associating the fifth association information. The verification set is a proper subset of the fourth dataset, or the verification set is the same as the fourth dataset. The verification set is used to verify a result of each model. In addition, in a training process, an algorithm may be continuously updated to adjust a model, and a best model may be selected based on a verification result. That the NWDAF determines a service experience model of the service in the at least one candidate service experience model may be, for example: The NWDAF obtains the verification set based on the fifth association information and the fourth dataset, the NWDAF determines, based on the verification set, a verification result corresponding to at least one candidate service experience model, and the NWDAF determines the service experience model of the service based on the verification result corresponding to the at least one candidate service experience model. For example, a candidate service experience model corresponding to a best verification result is determined as the service experience model. For another example, the verification results are sorted, N (N is an integer greater than 1) verification results ranked first are selected, a verification result is randomly selected from the N verification results, and a candidate service experience model corresponding to the selected verification result is determined as the service experience model.

In an implementation method, the fourth dataset further includes a test set, and the test set corresponds to sixth association information. In other words, data in the test set is obtained by associating the sixth association information. The test set is a proper subset of the fourth dataset, or the test set is the same as the fourth dataset. The test set is used to determine a test result of the service experience model. For example, the NWDAF may obtain the test set based on the sixth association information and the fourth dataset, and then the NWDAF determines the test result of the service experience model of the service based on the test set.

In an implementation method, the NWDAF may divide the fourth dataset into a training set, a verification set, and a test set. The training set, the verification set, and the test set have no intersection. Optionally, a union set of the training set, the verification set, and the test set is equal to the fourth dataset.

In another implementation method, the NWDAF may alternatively divide the fourth dataset into a training set, a verification set, and a test set. The training set, the verification set, and the test set have an intersection. Optionally, a union set of the training set, the verification set, and the test set is equal to the fourth dataset.

In an implementation method, after step 704, the NWDAF may further send, to the first device, the fourth association information corresponding to the training set, and the first device may determine the training set (which may also be referred to as a fifth dataset) on the first device based on the fourth association information and the third dataset, and perform model training based on the fifth dataset, to obtain at least one candidate service experience model corresponding to the service on the first device.

In an implementation method, after step 704, the NWDAF may further send, to the first device, the fifth association information corresponding to the verification set, and the first device may determine the verification set (which may also be referred to as a sixth dataset) on the first device based on the fifth association information and the third dataset, verify the at least one candidate service experience model based on the sixth dataset, and select, based on a verification result, a service experience model from the at least one candidate service experience model as the service experience model corresponding to the service on the first device.

In an implementation method, after step 704, the NWDAF may further send, to the first device, the sixth association information corresponding to the test set, and the first device may determine the test set (which may also be referred to as a seventh dataset) on the first device based on the sixth association information and the third dataset and test the service experience model based on the seventh dataset, to obtain a test result of the service experience model corresponding to the service on the first device.

The service experience model determined by the first device may be referred to as a service experience submodel of the first device, and the service experience model determined by the NWDAF may be referred to as a service experience submodel of the core network.

Based on the solution, the first device obtains data of the service of the terminal device on the first device, performs data alignment with the NWDAF, and then performs model training based on the aligned data to obtain an accurate service experience model. The first device does not need to obtain the data of the service of the terminal device on the core network element.

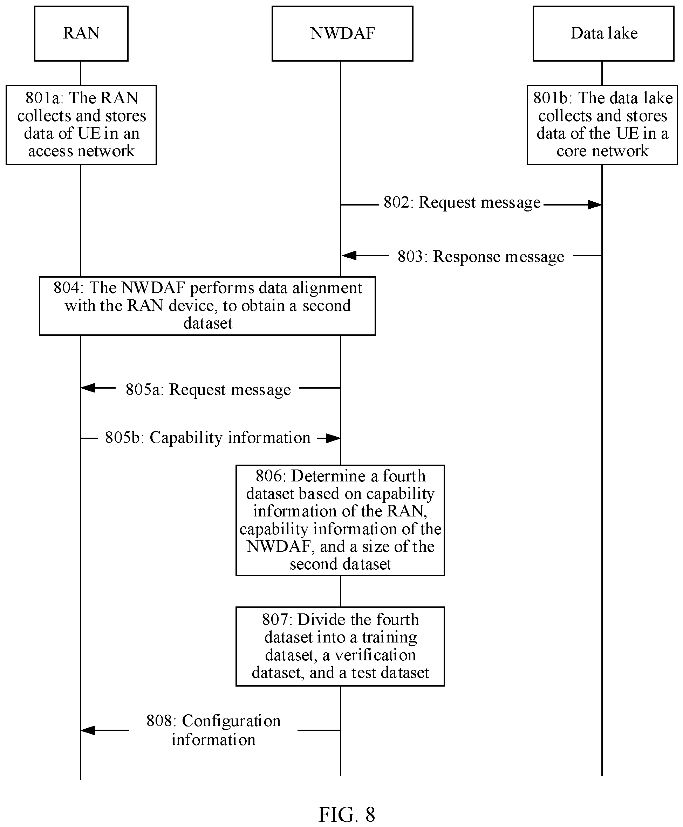

The method shown in FIG. 7 is described below with reference to specific embodiments corresponding to FIG. 8 to FIG. 10.

FIG. 8 is a schematic diagram of a method for determining a service experience model according to an embodiment of this application. Based on the method, a data lake exists on a core network side, and an NWDAF obtains, from the data lake based on address information of a RAN device, data of UE in a core network corresponding to the RAN device. The data of the UE and data of the UE in the RAN device may implement vertical federated learning.

The method includes the following steps.

Step 801a: A RAN device collects and stores data of UE in an access network.

The data collected by the RAN device includes a third dataset. In a possible implementation, the third dataset may include a plurality of pieces of data of the UE, and each piece of data of the UE corresponds to one piece of association information (also referred to as third association information).

The third association information is association information between the RAN and an AMF, and the third association information includes a global RAN node ID, a RAN UE NGAP ID, and a timestamp. The global RAN node ID is an identifier of the RAN, the RAN UE NGAP ID is an identifier allocated by the RAN device to the UE on an N2 interface, and the timestamp is a timestamp corresponding to the data of the UE collected by the RAN device.

Step 801b: A data lake collects and stores data of the UE in a core network.

For example, the data lake collects data of the UE on a core network element such as a UPF, an AMF, an SMF, and a PCF. In a possible implementation, when the core network element is a UPF and/or an AMF, for the data of the UE collected by the data lake, refer to Table 1.

The following uses an example in which the core network element is an AMF for description. To ensure that the data of the UE in the access network may be associated with the data of the UE in the core network, when the data lake subscribes to data of the UE on the AMF from the AMF by using a Namf_EventExposure_Subscribe service operation, the service operation may carry indication information, and the indication information is used to indicate a type of association information included in the data of the UE reported by the AMF. In a possible implementation, the association information includes a global RAN node ID, a RAN UE NGAP ID, and a timestamp. In another possible implementation, the association information includes a global RAN node ID, an AMF UE NGAP ID, and a timestamp.

The data lake may obtain the data of the UE in the core network according to the pairwise association method described above. Finally, each piece of association information corresponding to the data of the UE in the core network includes a global RAN node ID, a RAN UE NGAP ID, and a timestamp.

Step 802: The NWDAF sends a request message to the data lake. Correspondingly, the data lake receives the request message.

The request message carries a global RAN node ID and a specific time period, and the request message is used to request the data lake to feed back data that is of the UE in the core network, that is related to the RAN device, and that is within the specific time period. The global RAN node ID is identification information of the RAN device. Optionally, the request message further includes first indication information, the first indication information includes an event identifier (Event ID) and a network function type (network function type, NF type). The event identifier = a correlated CN dataset, and the network function types includes AMF, UPF, PCF, and the like. Optionally, the request message further includes second indication information, and the second indication information is used to indicate the data lake to feed back associated data that is of the UE in the core network, that is related to the RAN device, and that is within the specific time period. For a method for associating data of the UE on each network element in a core network domain by the data lake, refer to the pairwise association method described above.

In an implementation method, if the NWDAF determines, based on a local operator policy, that a service experience model needs to be trained for the RAN device, the NWDAF sends the request message to the data lake. For example, a service provider (that is, an AF) reflects to an operator that average service experience of a service within a specific time period in a specific area is poor, and the NWDAF, as a data analysis network element of the operator, determines, based on a vertical federated learning method, to obtain a service experience model through training by cooperation with the RAN device and the core network, or the core network and the AF, or the core network, the RAN device, and the AF.

For example, a method for obtaining an identifier of the RAN device by the NWDAF may be: The NWDAF queries an operation, administration and management (Operation, Administration and Management, OAM) device for the identifier of the RAN device deployed in the specific area. Because the NWDAF obtains information about the poor service experience from the service provider, the NWDAF may learn of address information of the AF.

Step 803: The data lake sends a response message to the NWDAF, and correspondingly, the NWDAF receives the response message.

The response message carries the data that is of the UE in the core network and that is related to the RAN device and association information corresponding to the data of the UE, and the association information includes a global RAN node ID, a RAN UE NGAP ID, and a timestamp.

The data of the UE obtained by the NWDAF from the data lake is referred to as a first dataset, and the association information corresponding to the data of the UE obtained by the NWDAF from the data lake is referred to as first association information. In a possible implementation, the first dataset may include a plurality of pieces of data of the UE, and each piece of data of the UE corresponds to one piece of association information (also referred to as the first association information).

Step 804: The NWDAF performs data alignment with the RAN device to obtain a second dataset.

In an implementation method, the NWDAF may send the obtained first association information to the RAN device, and the RAN device determines second association information based on the first association information and third association information. The second association information is an intersection of the first association information and the third association information. Then, the RAN device sends the second association information to the NWDAF. Therefore, the RAN device may determine a candidate dataset in the access network based on the second association information and a third dataset, and the NWDAF may determine a candidate dataset (also referred to as a second dataset) in the core network based on the second association information and the first dataset. The second dataset corresponds to the second association information.

In another implementation method, the RAN device may send the obtained third association information to the NWDAF, and the NWDAF determines second association information based on the first association information and third association information. The second association information is an intersection of the first association information and the third association information. Then, the NWDAF sends the second association information to the RAN device. Therefore, the RAN device may determine a candidate dataset in the access network based on the second association information, and the NWDAF may determine a candidate dataset (also referred to as a second dataset) in the core network based on the second association information and the first dataset.

For example, a candidate dataset on a RAN side includes 10 million pieces of data of the UE as follows:

data a1 of UE 1: corresponding to association information 1;
data a2 of UE 2: corresponding to association information 2;
data a3 of UE 3: corresponding to association information 3;
data a4 of UE 4: corresponding to association information 4;

...A candidate dataset (that is, the second dataset) on an NWDAF side includes 10 million pieces of data of the UE as follows:

data b1 of UE 1: corresponding to association information 1;
data b2 of UE 2: corresponding to association information 2;
data b3 of UE 3: corresponding to association information 3;
data b4 of UE 4: corresponding to association information 4;

Step 805a: The NWDAF sends a request message to the RAN device. Correspondingly, the RAN device receives the request message.

The request message is used to request to obtain capability information of the RAN device about participating in vertical federated training within the specific time period. For example, the request message carries specific time period information. Optionally, the request message carries indication information, and the indication information is used to indicate to obtain capability information of the RAN device about participating in vertical federated training within the specific time period.

Step 805b: The RAN device sends, to the NWDAF, the capability information of the RAN device about participating in vertical federated training within the specific time period. Correspondingly, the NWDAF receives the capability information of the RAN device about participating in vertical federated training within the specific time period.

Step 806: The NWDAF determines a fourth dataset based on the capability information of the RAN, capability information of the NWDAF, and a size of the candidate dataset (that is, the second dataset) on the NWDAF side.

The NWDAF determines, based on the capability information of the RAN, the capability information of the NWDAF, and the size of the second dataset, whether all of the second dataset can participate in training, and if not all of the second dataset can participate in training, selects a part of the data of the UE from the second dataset to form the fourth dataset.

For example, assuming that, after step 804, it is determined that the second dataset that can participate in vertical federated learning includes 10 million pieces of data of the UE, every 10% of a capability on the RAN device can accommodate 1 million pieces of data of the UE for training. Assuming that the NWDAF determines that the remaining 80% capability on the RAN side can be used for training, the NWDAF may randomly select 8 million pieces of data of the UE from the 10 million pieces of the data of the UE to participate in federated training, that is, the selected fourth dataset includes the 8 million pieces of the data of the UE.

Step 807: The NWDAF divides the fourth dataset into a training dataset, a verification dataset, and a test dataset.

For example, in the foregoing example, for the selected 8 million pieces of the data of the UE, the NWDAF may randomly divide the data into 7 million pieces, 0.5 million pieces, and 0.5 million pieces, respectively used as the training dataset, the verification dataset, and the test dataset. The training dataset includes one or more pieces of data, and the training dataset corresponds to fourth association information. The verification dataset includes one or more pieces of data, and the verification dataset corresponds to fifth association information. The test dataset includes one or more pieces of data, and the test dataset corresponds to sixth association information.

Step 808: The NWDAF sends configuration information to the RAN. Correspondingly, the RAN receives the configuration information.

The configuration information is used to indicate association information, that is, the fourth association information, the fifth association information, and the sixth association information, respectively corresponding to the training dataset, the verification dataset, and the test dataset that are used for vertical federated learning on the RAN side. Therefore, the RAN may select, based on the configuration information from the candidate dataset on the RAN side, a part of the data of the UE to form the training dataset on the RAN side, a part of the data of the UE to form the verification dataset on the RAN side, and a part of the data of the UE to form the test dataset on the RAN side.

Optionally, the configuration information further includes an algorithm type used for vertical federated learning and parameter information that is set inside each algorithm (for example, a quantity of layers of a neural network algorithm, an activation function used by each layer, and a loss function type).

Because both the NWDAF and the RAN determine the training dataset, the verification dataset, and the test dataset of the vertical federated learning, subsequently, the NWDAF and the RAN may perform model training according to a vertical federated learning method, to obtain the service experience model. For example, with reference to the foregoing described method, the RAN is used as a client A, and the NWDAF is used as a client B. The client A and the client B perform model training based on the training dataset, the verification dataset, and the test dataset, to obtain the service experience model.

Based on the solution, the NWDAF obtains data of a service of a terminal device on a core network element, performs data alignment with the RAN device, and then performs model training based on the aligned data to obtain an accurate service experience model. The NWDAF does not need to obtain data of the service of the terminal device on the RAN device.

It should be noted that alternatively, the NWDAF may send, to the RAN device in different phases (for example, a training phase, a verification phase, and a test phase), association information corresponding to the training dataset, the verification dataset, and the test dataset, to indicate the RAN device to perform model training, model verification, or model testing.

It should be noted that the NWDAF may be a training NWDAF. The training NWDAF obtains the service experience model after model training is performed according to the vertical federation method, and then transfers the service experience model to an inference NWDAF to generate a data analysis result on a core network side. The inference NWDAF mainly determines the data analysis result based on the trained service experience model and new data.

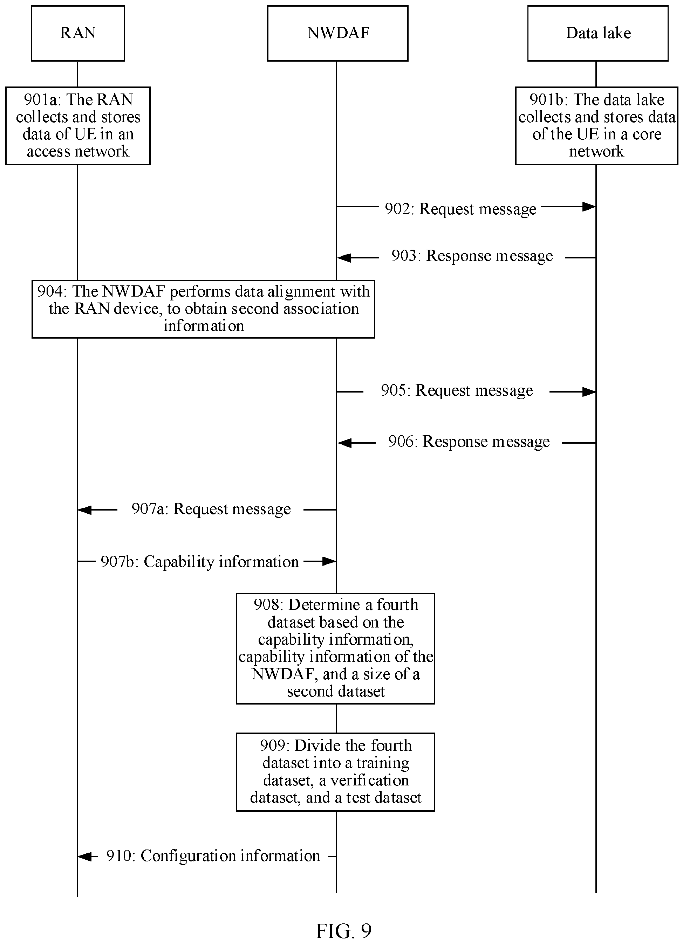

FIG. 9 is a schematic diagram of a method for determining a service experience model according to an embodiment of this application. Based on the method, a data lake exists on a core network side, and an NWDAF obtains, from the data lake based on address information of a RAN device, data of UE in a core network corresponding to the RAN device. The data of the UE and data of the UE in the RAN device may implement vertical federated learning.

The method includes the following steps.

Step 901a to step 901b are the same as step 801a to step 801b. Refer to the foregoing descriptions.

Step 902: The NWDAF sends a request message to the data lake. Correspondingly, the data lake receives the request message.

The request message carries a global RAN node ID and a specific time period, and the request message is used to request the data lake to feed back association information corresponding to data that is of the UE in the core network, that is related to the RAN device, and that is within the specific time period. The global RAN node ID is identification information of the RAN device. Optionally, the request message further includes first indication information, the first indication information includes an event identifier (Event ID) and a network function type (network function type, NF type). The event identifier = a sample ID list, and the network function types includes AMF, UPF, PCF, and the like. Optionally, the request message further includes second indication information, and the second indication information is used to indicate the data lake to feed back association information corresponding to associated data that is of the UE in the core network, that is related to the RAN device, and that is within the specific time period. For a method for associating data of the UE on each network element in a core network domain by the data lake, refer to the pairwise association method described above.

In an implementation method, if the NWDAF determines, based on a local operator policy, that a service experience model needs to be trained for the RAN device, the NWDAF sends the request message to the data lake. For example, a service provider (that is, an AF) reflects to an operator that average service experience of a service within a specific time period in a specific area is poor, and the NWDAF, as a data analysis network element of the operator, determines, based on a vertical federated learning method, to obtain a service experience model through training by cooperation with the RAN device and the core network, or the core network and the AF, or the core network, the RAN device, and the AF.

For example, a method for obtaining an identifier of the RAN device by the NWDAF may be: The NWDAF queries an OAM device for the identifier of the RAN device deployed in the specific area. Because the NWDAF obtains information about the poor service experience from the service provider, the NWDAF may learn of address information of the AF.

Step 903: The data lake sends a response message to the NWDAF, and correspondingly, the NWDAF receives the response message.

The response message carries the association information corresponding to the data that is of the UE in the core network and that is related to the RAN device, and the association information includes a global RAN node ID, a RAN UE NGAP ID, and a timestamp. Optionally, the response message further carries a total size of the data that is of the UE in the core network and that is related to the RAN device, or a size of data corresponding to each UE in the data that is in the core network and that is related to the RAN device.

The association information obtained by the NWDAF from the data lake is referred to as first association information.

Step 904: The NWDAF performs data alignment with the RAN device to obtain second association information.

In an implementation method, the NWDAF may send the obtained first association information to the RAN device, and the RAN device determines second association information based on the first association information and third association information. The second association information is an intersection of the first association information and the third association information. Then, the RAN sends the second association information to the NWDAF. Therefore, the RAN device may determine a candidate dataset in the access network based on the second association information and a third dataset.

In another implementation method, the RAN may send the obtained third association information to the NWDAF, and the NWDAF determines second association information based on the first association information and third association information. The second association information is an intersection of the first association information and the third association information. Then, the NWDAF sends the second association information to the RAN device. Therefore, the RAN device may determine a candidate dataset in the access network based on the second association information and a third dataset.

Step 905: The NWDAF sends a request message to the data lake. Correspondingly, the data lake receives the request message.

The request message carries the second association information, and the request message is used to request to obtain data of the UE corresponding to the second association information.

Step 906: The data lake sends a response message to the NWDAF, and correspondingly, the NWDAF receives the response message.

The response message carries the data that is of the UE in the core network, that is related to the RAN device, and that corresponds to the second association information, and the second association information includes a global RAN node ID, a RAN UE NGAP ID, and a timestamp. A set that includes the data that is of the UE in the core network, that is related to the RAN device, and that corresponds to the second association information is referred to as a second dataset.

Therefore, by using step 902 to step 903, the NWDAF may obtain, from the data lake, the association information (namely, the first association information) corresponding to the data of the UE in the core network, and by using step 905 to step 906, the NWDAF may obtain the data (namely, the second dataset) of the UE corresponding to the aligned second association information.

Step 907a to step 910 are the same as step 805a to step 808. Refer to the foregoing descriptions.

Because both the NWDAF and the RAN determine the training dataset, the verification dataset, and the test dataset of the vertical federated learning, subsequently, the NWDAF and the RAN may perform model training according to a vertical federated learning method, to obtain the service experience model. For example, with reference to the foregoing described method, the RAN is used as a client A, and the NWDAF is used as a client B. The client A and the client B perform model training based on the training dataset, the verification dataset, and the test dataset. Then, the client A and the client B exchange information such as intermediate results $\Theta_A x_i^A$ and $d_i$. The two clients jointly obtain the service experience model. A parameter $\Theta_A$ corresponding to the service experience model is reserved on the client A, and a parameter $\Theta_B$ is reserved on the client B, for local inference.

Based on the solution, the NWDAF obtains data of a service of a terminal device on a core network element, performs data alignment with the RAN device, and then performs model training based on the aligned data to obtain an accurate service experience model. The NWDAF does not need to obtain data of the service of the terminal device on the RAN device. In addition, in this solution, the NWDAF does not obtain all of the data of the UE in the core network from the data lake, but obtains the data of the UE corresponding to the aligned second association information. Therefore, transmission pressure between the NWDAF and the data lake can be reduced.

It should be noted that the NWDAF may be a training NWDAF. The training NWDAF obtains the service experience model after model training is performed according to the vertical federation method, and then transfers the service experience model to an inference NWDAF to generate a data analysis result on the core network side. The inference NWDAF mainly determines the data analysis result based on the trained service experience model and new data.

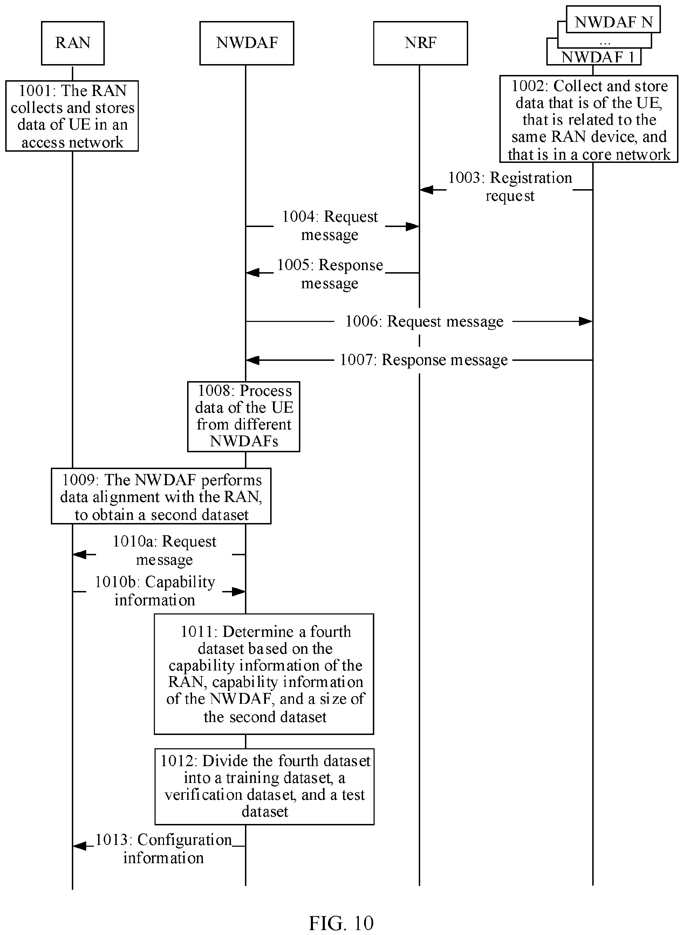

FIG. 10 is a schematic diagram of a method for determining a service experience model according to an embodiment of this application. In this solution, no data lake is involved. Data of UE on a core network side is distributed in different NWDAFs (with a data collection function). After each NWDAF completes collection of the data of the UE in the core network, information about the RAN device corresponding to the data of the UE in the core network may be registered with an NRF, to assist an NWDAF that supports federated learning training in addressing the NWDAFs by using the NRF, and then, data that is of the UE in the core network and that is related to a RAN device is requested from the NWDAFs.

The method includes the following steps.

Step 1001 is the same as step 801a. Refer to the foregoing descriptions.

Step 1002: Different NWDAFs on a core network side collect and store data that is of the UE, that is related to a same RAN device, and that is in a core network.

Different NWDAFs may collect data that is of UE, that is related to a same RAN device, and that is on a same core network element or different core network elements. For example, an NWDAF 1 to an NWDAF 3 collect data that is of the UE, that is related to the RAN device, and that is on an AMF. An NWDAF 4 to an NWDAF 7 collect data that is of the UE, that is related to the RAN device, and that is on an SMF. An NWDAF 8 to an NWDAF 10 collect data that is of the UE, that is related to the RAN device, and that is on a UPF, and so on.

Step 1003: Different NWDAFs on the core network side send registration requests to an NRF, and correspondingly, the NRF receives the registration requests.

The registration request is used to request identification information of an NWDAF to be registered with the NRF, and the NWDAF is an NWDAF that stores data of the UE corresponding to association information.

In an implementation method, the registration request carries a global RAN node ID, a timestamp, and an NWDAF ID.

In another implementation method, the registration request carries a global RAN node ID, a RAN UE NGAP ID, a timestamp, and an NWDAF ID.

Step 1004: A training NWDAF sends a request message to the NRF. Correspondingly, the NRF receives the request message.

The request message carries a global RAN node ID and a specific time period, and the request message is used to request an NWDAF ID corresponding to the global RAN node ID and the specific time period. In other words, the NWDAF indicated by the NWDAF ID stores data that is of the UE, that is related to a RAN device corresponding to the global RAN node ID, and that is within the specific time period.

Step 1005: The NRF sends a response message to the training NWDAF. Correspondingly, the training NWDAF receives the response message.

The response message carries one or more NWDAF IDs.

Step 1006: The training NWDAF sends request messages to different NWDAFs. Correspondingly, the different NWDAF receive the request messages.

The request message carries a global RAN node ID and a specific time period, and the request message is used to request to feed back data that is of the UE, that is related to the RAN device, and that is within the specific time period. Optionally, the request message carries indication information, and the indication information is used to indicate to feed back the data that is of the UE, that is related to the RAN device, and that is within the specific time period.

Step 1007: The different NWDAFs sends response messages to the training NWDAF, and correspondingly, the training NWDAF receives the response messages.

The response message carries the data of the UE related to the RAN device and association information corresponding to each piece of the data of the UE. For example, the association information includes a global RAN node ID, a RAN UE NGAP ID, and a timestamp, includes a global RAN node ID, an AN tunnel info, and a timestamp, or includes a global RAN node ID, an SUPI, and a timestamp.

Step 1008: The training NWDAF processes data of the UE from the different NWDAFs.

For example, the training NWDAF unifies association information corresponding to the data of the UE from the different NWDAFs as a global RAN node ID, a RAN UE NGAP ID, and a timestamp, and deduplicates the data of the UE.

A set of data of the UE that is obtained through processing performed by the training NWDAF is referred to as a first dataset, and association information corresponding to the first dataset is referred to as first association information.

Step 1009 to step 1013 are the same as step 804 to step 808. Refer to the foregoing descriptions.

Based on the solution, the NWDAF obtains data of a service of a terminal device on a core network element, performs data alignment with the RAN device, and then performs model training based on the aligned data to obtain an accurate service experience model. The NWDAF does not need to obtain data of the service of the terminal device on the RAN device. In addition, the foregoing solution is for a scenario in which no data lake exists, and data of the UE associated with a RAN device may exist in different NWDAFs. In this way, the training NWDAF that supports federated learning may request the data of the UE from the NWDAFs based on an identifier of the RAN device.

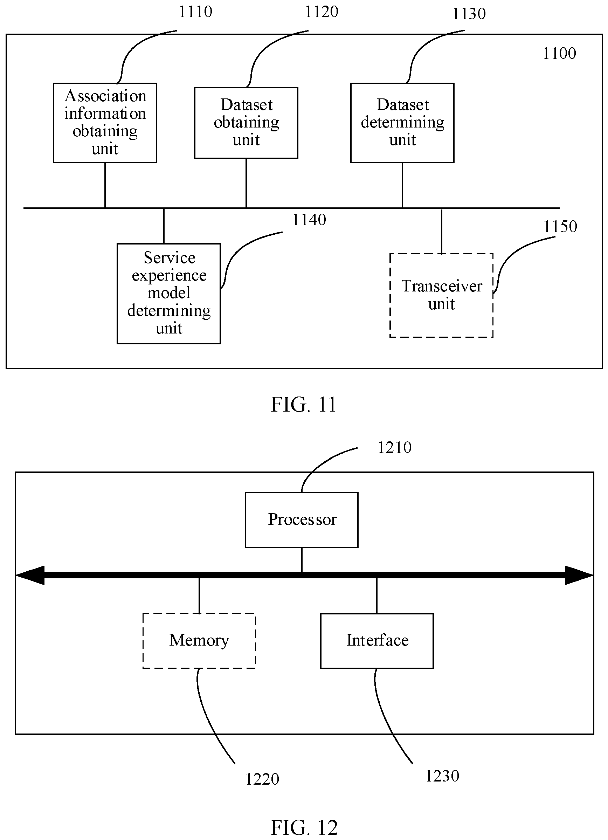

FIG. 11 is a schematic diagram of a communication apparatus according to an embodiment of this application. The communication apparatus is configured to implement steps of the corresponding data analysis network element in the foregoing embodiments. As shown in FIG. 11, the communication apparatus 1100 includes an association information obtaining unit 1110, a dataset obtaining unit 1120, a dataset determining unit 1130, and a service experience model determining unit 1140. Optionally, the communication apparatus further includes a transceiver unit 1150.

The association information obtaining unit 1110 is configured to obtain first association information corresponding to a first dataset, where the first dataset includes data of a service on a core network element. The dataset obtaining unit 1120 is configured to obtain a second dataset based on the first association information, where the second dataset includes data corresponding to second association information in the first dataset, the second association information is an intersection of the first association information and third association information, the third association information corresponds to a third dataset, and the third dataset includes data of the service on a first device. The dataset determining unit 1130 is configured to determine a fourth dataset based on first information and the second dataset, where the fourth dataset is a subset or all of the second dataset, and the first information includes capability information of the first device and/or capability information of the data analysis network element. The service experience model determining unit 1140 is configured to determine a service experience model of the service based on the fourth dataset.

In a possible implementation method, the fourth dataset includes a training set, the training set corresponds to fourth association information, and the service experience model determining unit 1140 is specifically configured to: obtain the training set based on the fourth association information and the fourth dataset; determine at least one candidate service experience model based on the training set; and determine the service experience model of the service in the at least one candidate service experience model.

In a possible implementation method, the fourth dataset further includes a verification set, the verification set corresponds to fifth association information, and the service experience model determining unit 1140 is specifically configured to: obtain the verification set based on the fifth association information and the fourth dataset, determine, based on the verification set, a verification result corresponding to the at least one candidate service experience model; and determine the service experience model of the service based on the verification result corresponding to the at least one candidate service experience model.

In a possible implementation method, the fourth dataset further includes a test set, the test set corresponds to sixth association information, and the service experience model determining unit 1140 is further configured to: obtain the test set based on the sixth association information and the fourth dataset; and determine a test result of the service experience model of the service based on the test set.

In a possible implementation method, the transceiver unit 1150 is configured to send, to the first device, the fourth association information corresponding to the training set.

In a possible implementation method, the transceiver unit 1150 is configured to: send a first request to a second device, where the first request carries identification information of the first device, and the first request is used to request the first dataset; and receive the first dataset from the second device.

In a possible implementation method, the dataset obtaining unit 1120 is specifically configured to: send the first association information to the first device by using the transceiver unit 1150; receive the second association information from the first device by using the transceiver unit 1150; and obtain the second dataset based on the second association information and the first dataset.

In a possible implementation method, the dataset obtaining unit 1120 is specifically configured to: receive the third association information from the first device by using the transceiver unit 1150; determine the second association information based on the third association information and the first association information; and obtain the second dataset based on the second association information and the first dataset.

In a possible implementation method, the association information obtaining unit 1110 is specifically configured to: send a second request to a second device by using the transceiver unit 1150, where the second request carries identification information of the first device, and the second request is used to request the first association information corresponding to the first dataset; and receive the first association information from the second device by using the transceiver unit 1150.

In a possible implementation method, the dataset obtaining unit 1120 is specifically configured to: determine the second association information based on the first association information; send a third request to the second device by using the transceiver unit 1150, where the third request carries the second association information, and the third request is used to request the second dataset; and receive the second dataset from the second device by using the transceiver unit 1150.

In a possible implementation method, the transceiver unit 1150 is further configured to: send a fourth request to a network element storage function network element, where the fourth request is used to request address information of the second device; and receive the address information of the second device from the network element storage function network element.

In a possible implementation method, the second device is a data analysis network element that supports a data lake function, is a data analysis network element that supports a data collection and coordination function, or is a data analysis network element that supports a data collection function.

In a possible implementation method, the first device is an access network device or a service device.

In a possible implementation method, the first association information includes the following information: the identification information of the first device, identification information allocated by the first device to a terminal device, and a timestamp.

In a possible implementation method, the identification information allocated by the first device to the terminal device is identification information allocated by the first device to the terminal device on a first interface, and the first interface is an interface between the first device and the core network element.

Optionally, the communication apparatus may further include a storage unit. The storage unit is configured to store data or instructions (which may also be referred to as code or a program). The units may interact with or be coupled to the storage unit to implement a corresponding method or function. For example, the processing unit 1120 may read data or instructions in the storage unit, so that the communication apparatus implements the method in the foregoing embodiment.

It should be understood that division into the units in the communication apparatus is merely division of logical functions. In actual implementation, all or some of the units may be integrated into one physical entity, or may be physically separated. In addition, all units in the communication apparatus may be implemented in a form of software by invoking a processing element, or may be implemented in the form of hardware. Alternatively, some units may be implemented in a form of software by invoking a processing element, and some units may be implemented in a form of hardware. For example, each unit may be a separately disposed processing element, or may be implemented by being integrated into a chip of the communication apparatus. In addition, each unit may be stored in a memory in a form of a program, and a function of the unit is invoked and executed by a processing element of the communication apparatus. In addition, all or some of these units may be integrated, or may be independently implemented. The processing element herein may alternatively be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, any one of the foregoing units in the communication apparatus may be one or more integrated circuits configured to implement the foregoing method, for example, one or more application specific integrated circuits (application specific integrated circuit, ASIC), one or more microprocessors (digital signal processor, DSP), one or more field programmable gate arrays (field programmable gate array, FPGA), or a combination of at least two of these integrated circuit forms. For another example, when the units in the communication apparatus may be implemented in a form of invoking a program by a processing element, the processing element may be a general purpose processor, for example, a central processing unit (central processing unit, CPU) or another processor that can invoke a program. For still another example, the units may be integrated and implemented in a form of a system-on-a-chip (system-on-a-chip, SOC).

FIG. 12 is a schematic diagram of a communication apparatus according to an embodiment of this application. The communication apparatus is configured to implement an operation of a data analysis network element in the foregoing embodiment. As shown in FIG. 12, the communication apparatus includes: a processor 1210 and an interface 1230. Optionally, the communication apparatus further includes a memory 1220. The interface 1230 is configured to communicate with another device.

The method executed by the data analysis network element in the foregoing embodiments may be implemented by invoking, by the processor 1210, a program stored in the memory (which may be the memory 1220 in the data analysis network element, or may be an external memory). In other words, the data analysis network element may include a processor 1210. The processor 1210 invokes a program in the memory to perform the method performed by the data analysis network element in the foregoing method embodiments. The processor herein may be an integrated circuit having a signal processing capability, for example, a CPU. The data analysis network element may be implemented by one or more integrated circuits configured to implement the foregoing methods, for example, one or more ASICs, one or more microprocessors DSPs, one or more FPGAs, or a combination of at least two of these integrated circuit forms. Alternatively, the foregoing implementations may be combined.

Specifically, functions/implementation processes of the association information obtaining unit 1110, the dataset obtaining unit 1120, the dataset determining unit 1130, the service experience model determining unit 1140, and the transceiver unit 1150 in FIG. 11 may be implemented by invoking, by the processor 1210 in the communication apparatus 1200 shown in FIG. 12, computer executable instructions stored in the memory 1220. Alternatively, the functions/implementation processes of the association information obtaining unit 1110, the dataset obtaining unit 1120, the dataset determining unit 1130, and the service experience model determining unit 1140 in FIG. 11 may be implemented by invoking, by the processor 1210 in the communication apparatus 1200 shown in FIG. 12, the computer executable instructions stored in the memory 1220. The function/implementation process of the transceiver unit 1150 in FIG. 11 may be implemented by using the interface 1230 in the communication apparatus 1200 shown in FIG. 12. For example, a function/implementation process of the transceiver unit 1150 may be implemented by invoking, by the processor, the program instructions in the memory to drive the interface 1230.

A person of ordinary skill in the art may understand that various numeral numbers such as "first" and "second" in this application are merely used for differentiation for ease of description, are not intended to limit the scope of the embodiments of this application, and also indicate a sequence. The term "and/or" is an association relationship for describing associated objects and represents that three relationships may exist. For example, A and/or B may represent the following three cases: only A exists, both A and B exist, and only B exists. The character "/" generally indicates an "or" relationship between associated objects. "At least one" means one or more. "At least two" means two or more. "At least one", "any one", or a similar expression thereof means any combination of these items, including a singular item (piece) or any combination of a plurality of items (pieces). For example, at least one item (piece, or type) of a, b, or c may represent: a, b, c, a and b, a and c, b and c, or, a, b, and c, where a, b, and c may be singular or plural. "A plurality of" means two or more, and other quantifiers are similar.

It should be understood that sequence numbers of the foregoing processes do not mean execution sequences in various embodiments of this application. The execution sequences of the processes should be determined according to functions and internal logic of the processes, and should not be construed as any limitation on the implementation processes of the embodiments of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium that can be accessed by a computer, or a data storage device such as a server or a data center that integrates one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

The various illustrative logical units and circuits described in the embodiments of this application may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. A processor may also be achieved through the combination of computing devices, such as combination of a digital signal processor and a microprocessor, multiple microprocessors, one or more microprocessors and one digital signal processor, or any other similar configurations.

Steps of the methods or algorithms described in the embodiments of this application may be directly embedded into hardware, a software unit executed by a processor, or a combination thereof. The software unit may be stored in a random access memory (Random Access Memory, RAM), a flash memory, a read-only memory (Read-Only Memory, ROM), an EPROM memory, an EEPROM memory, a register, a hard disk, a removable disk, a CD-ROM or any other form of storage medium in the art. For example, storage media may be connected to a processor so that the processor may read information from the storage media and may save the information in the storage media. Optionally, the storage medium may also be integrated into the processor. The processor and the storage medium may be disposed in anASIC.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In one or more example designs, the foregoing functions described in this application may be implemented by hardware, software, firmware, or any combination of the three. If the present invention is implemented by software, these functions may be stored in a computer-readable medium or are transmitted to the computer-readable medium in a form of one or more instructions or code. The computer-readable medium is either a computer storage medium or a communication medium that enables a computer program to move from one place to another. The storage medium may be an available medium that may be accessed by any general or special computer. For example, such a computer-readable medium may include but is not limited to a RAM, a ROM, an EEPROM, a CD-ROM, or another optical disc storage, a disk storage or another magnetic storage apparatus, or any other medium that may be used to bear or store program code, where the program code is in a form of an instruction or a data structure or in a form that can be read by a general-purpose or special-purpose computer or a general-purpose or special-purpose processor. In addition, any connection may be appropriately defined as a computer-readable medium. For example, if software is transmitted from a website, a server, or another remote resource by using a coaxial cable, an optical fiber computer, a twisted pair, a digital subscriber line (DSL) or in a wireless manner, such as infrared, radio, or microwave, the software is included in a defined computer-readable medium. The disc (disk) and the disc (disc) include a compressed disc, a laser disc, an optical disc, a digital versatile disc (English: Digital Versatile Disc, DVD for short), a floppy disk, and a Blu-ray disc. A disc usually magnetically copies data, and a disk usually optically copies data with a laser. The foregoing combination may also be included in the computer-readable medium.

A person of skill in the art should be aware that in one or more of the foregoing examples, the functions described in this application may be implemented by using hardware, software, firmware, or any combination thereof. When the functions are implemented by software, these functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or special-purpose computer

The objectives, technical solutions, and benefits of this application are further described in detail in the foregoing specific embodiments. It should be understood that the foregoing descriptions are merely specific embodiments of this application, but are not intended to limit the protection scope of this application. Any modification or improvement made based on the technical solutions of this application shall fall within the protection scope of this application. The foregoing descriptions in the specification of this application may enable a person of skill in the art to utilize or implement content of this application, and any modification based on the disclosed content shall be considered obvious in the art. The basic principles described in this application may be applied to other variations without departing from the essence and scope of the invention of this application. Therefore, the content disclosed in this application is not merely limited to the described embodiments and designs, but may further be extended to a maximum scope that is consistent with the principles of this application and new features disclosed in this application.

Although this application has been described with reference to specific features and embodiments thereof, it is obvious that various modifications and combinations may be made to this application without departing from the spirit and the scope of this application. Correspondingly, the specification and the accompanying drawings are merely example descriptions of this application defined by the appended claims, and are considered to have covered any and all modifications, variations, combinations, or equivalents that fall within the scope of this application. It is clear that a person skilled in the art can make various modifications and variations to this application without departing from the scope of this application. In this way, this application is intended to cover these modifications and variations of this application provided that the modifications and variations fall within the scope of the claims of this application and their equivalent technologies.

**Claims**

1. A method for determining a service experience model, comprising:

   obtaining, by a data analysis network element, first association information corresponding to a first dataset, wherein the first dataset comprises data of a service on a core network element;
   obtaining, by the data analysis network element, a second dataset based on the first association information, wherein the second dataset comprises data corresponding to second association information in the first dataset, the second association information is an intersection of the first association information and third association information, the third association information corresponds to a third dataset, and the third dataset comprises data of the service on a first device;
   determining, by the data analysis network element, a fourth dataset based on first information and the second dataset, wherein the fourth dataset is a subset or all of the second dataset, and the first information comprises capability information of the first device and/or capability information of the data analysis network element; and
   determining, by the data analysis network element, a service experience model of the service based on the fourth dataset.

2. The method according to claim 1, wherein the fourth dataset comprises a training set, the training set corresponds to fourth association information, and the determining, by the data analysis network element, a service experience model of the service based on the fourth dataset comprises:

   obtaining, by the data analysis network element, the training set based on the fourth association information and the fourth dataset;
   determining, by the data analysis network element, at least one candidate service experience model based on the training set; and
   determining, by the data analysis network element, the service experience model of the service in the at least one candidate service experience model.

3. The method according to claim 2, wherein the fourth dataset further comprises a verification set, the verification set corresponds to fifth association information, and the determining, by the data analysis network element, the service experience model of the service in the at least one candidate service experience model comprises:

   obtaining, by the data analysis network element, the verification set based on the fifth association information and the fourth dataset;
   determining, by the data analysis network element based on the verification set, a verification result corresponding to the at least one candidate service experience model; and
   determining, by the data analysis network element, the service experience model of the service based on the verification result corresponding to the at least one candidate service experience model.

4. The method according to claim 3, wherein the fourth dataset further comprises a test set, the test set corresponds to sixth association information, and the method further comprises:

   obtaining, by the data analysis network element, the test set based on the sixth association information and the fourth dataset; and
   determining, by the data analysis network element, a test result of the service experience model of the service based on the test set.

5. The method according to any one of claims 2 to 4, wherein the method further comprises:
   sending, by the data analysis network element to the first device, the fourth association information corresponding to the training set.

**6.** The method according to any one of claims 1 to 5, wherein the method further comprises:

sending, by the data analysis network element, a first request to a second device, wherein the first request carries identification information of the first device, and the first request is used to request the first dataset; and receiving, by the data analysis network element, the first dataset from the second device.

**7.** The method according to any one of claims 1 to 6, wherein the obtaining, by the data analysis network element, a second dataset based on the first association information comprises:

sending, by the data analysis network element, the first association information to the first device; receiving, by the data analysis network element, the second association information from the first device; and obtaining, by the data analysis network element, the second dataset based on the second association information and the first dataset.

**8.** The method according to any one of claims 1 to 6, wherein the obtaining, by the data analysis network element, a second dataset based on the first association information comprises:

receiving, by the data analysis network element, the third association information from the first device; determining, by the data analysis network element, the second association information based on the third association information and the first association information; and obtaining, by the data analysis network element, the second dataset based on the second association information and the first dataset.

**9.** The method according to any one of claims 1 to 5, wherein the obtaining, by a data analysis network element, first association information corresponding to a first dataset comprises:

sending, by the data analysis network element, a second request to a second device, wherein the second request carries identification information of the first device, and the second request is used to request the first association information corresponding to the first dataset; and receiving, by the data analysis network element, the first association information from the second device.

**10.** The method according to claim 9, wherein the obtaining, by the data analysis network element, a second dataset based on the first association information comprises:

determining, by the data analysis network element, the second association information based on the first association information; sending, by the data analysis network element, a third request to the second device, wherein the third request carries the second association information, and the third request is used to request the second dataset; and receiving, by the data analysis network element, the second dataset from the second device.

**11.** The method according to any one of claim 6, 9, or 10, wherein the method further comprises:

sending, by the data analysis network element, a fourth request to a network element storage function network element, wherein the fourth request is used to request address information of the second device; and receiving, by the data analysis network element, the address information of the second device from the network element storage function network element.

**12.** The method according to any one of claims 6 and 9 to 11, wherein the second device is a data analysis network element that supports a data lake function, is a data analysis network element that supports a data collection and coordination function, or is a data analysis network element that supports a data collection function.

**13.** The method according to any one of claims 1 to 12, wherein the first device is an access network device or a service device.

**14.** The method according to any one of claims 1 to 13, wherein the first association information comprises the following information:
the identification information of the first device, identification information allocated by the first device to a terminal device, and a timestamp.

**15.** The method according to claim 14, wherein the identification information allocated by the first device to the terminal device is identification information allocated by the first device to the terminal device on a first interface, and the first interface is an interface between the first device and the core network element.

**16.** A communication apparatus, comprising:

an association information obtaining unit, configured to obtain first association information corresponding to a first dataset, wherein the first dataset comprises data of a service on a core network element;
a dataset obtaining unit, configured to obtain a second dataset based on the first association information, wherein the second dataset comprises data corresponding to second association information in the first dataset, the second association information is an intersection of the first association information and third association information, the third association information corresponds to a third dataset, and the third dataset comprises data of the service on a first device;
a dataset determining unit, configured to determine a fourth dataset based on first information and the second dataset, wherein the fourth dataset is a subset or all of the second dataset, and the first information comprises capability information of the first device and/or capability information of the data analysis network element; and
a service experience model determining unit, configured to determine a service experience model of the service based on the fourth dataset.

**17.** The apparatus according to claim 16, wherein the fourth dataset comprises a training set, the training set corresponds to fourth association information, and the service experience model determining unit is specifically configured to:

obtain the training set based on the fourth association information and the fourth dataset;
determine at least one candidate service experience model based on the training set; and
determine the service experience model of the service in the at least one candidate service experience model.

**18.** The apparatus according to claim 17, wherein the fourth dataset further comprises a verification set, the verification set corresponds to fifth association information, and the service experience model determining unit is specifically configured to:

obtain the verification set based on the fifth association information and the fourth dataset;
determine, based on the verification set, a verification result corresponding to the at least one candidate service experience model; and
determine the service experience model of the service based on the verification result corresponding to the at least one candidate service experience model.

**19.** The apparatus according to claim 18, wherein the fourth dataset further comprises a test set, the test set corresponds to sixth association information, and the service experience model determining unit is further configured to:

obtain the test set based on the sixth association information and the fourth dataset; and
determine a test result of the service experience model of the service based on the test set.

**20.** The apparatus according to any one of claims 17 to 19, wherein the apparatus further comprises a transceiver unit, configured to send, to the first device, the fourth association information corresponding to the training set.

**21.** The apparatus according to any one of claims 16 to 20, wherein the apparatus further comprises a transceiver unit, configured to:

send a first request to a second device, wherein the first request carries identification information of the first device, and the first request is used to request the first dataset; and
receive the first dataset from the second device.

**22.** The apparatus according to any one of claims 16 to 21, wherein the apparatus further comprises the transceiver unit; and the dataset obtaining unit is specifically configured to:

send the first association information to the first device by using the transceiver unit;
receive the second association information from the first device by using the transceiver unit; and
obtain the second dataset based on the second association information and the first dataset.

**23.** The apparatus according to any one of claims 16 to 21, wherein the apparatus further comprises the transceiver unit; and
the dataset obtaining unit is specifically configured to:

receive the third association information from the first device by using the transceiver unit;
determine the second association information based on the third association information and the first association information; and
obtain the second dataset based on the second association information and the first dataset.

**24.** The apparatus according to any one of claims 16 to 20, wherein the apparatus further comprises the transceiver unit; and
the association information obtaining unit is specifically configured to:

send a second request to a second device by using the transceiver unit, wherein the second request carries identification information of the first device, and the second request is used to request the first association information corresponding to the first dataset; and
receive the first association information from the second device by using the transceiver unit.

**25.** The apparatus according to claim 24, wherein the dataset obtaining unit is specifically configured to:

determine the second association information based on the first association information;
send a third request to the second device by using the transceiver unit, wherein the third request carries the second association information, and the third request is used to request the second dataset; and
receive the second dataset from the second device by using the transceiver unit.

**26.** The apparatus according to any one of claim 21, 24, or 25, wherein the transceiver unit is further configured to:

send a fourth request to a network element storage function network element, wherein the fourth request is used to request address information of the second device; and
receive the address information of the second device from the network element storage function network element.

**27.** The apparatus according to any one of claims 21 and 24 to 26, wherein the second device is a data analysis network element that supports a data lake function, is a data analysis network element that supports a data collection and coordination function, or is a data analysis network element that supports a data collection function.

**28.** The apparatus according to any one of claims 16 to 27, wherein the first device is an access network device or a service device.

**29.** The apparatus according to any one of claims 16 to 28, wherein the first association information comprises the following information:
the identification information of the first device, identification information allocated by the first device to a terminal device, and a timestamp.

**30.** The apparatus according to claim 29, wherein the identification information allocated by the first device to the terminal device is identification information allocated by the first device to the terminal device on a first interface, and the first interface is an interface between the first device and the core network element.

**31.** A communication apparatus, comprising: a processor, wherein the processor is coupled to a memory, the memory is configured to store a program or instructions, and when the program or the instructions are executed by the processor, the apparatus is enabled to perform the method according to any one of claims 1 to 15.

**32.** A chip system, wherein the chip system comprises at least one processor and an interface circuit, the interface circuit is coupled to the at least one processor, and the processor executes the method according to any one of claims 1 to 15 by running instructions.

**33.** A computer-readable storage medium, comprising instructions, wherein when the instructions are run on a computer, the computer is enabled to perform the method according to any one of claims 1 to 15.

**34.** A communication system, comprising:

a data analysis network element, configured to perform the method according to any one of claims 1 to 15; and
a core network element configured to communicate with the data analysis network element.

NEF    NRF    PCF    UDM    AF

Nnef    Nnrf    Npcf    Nudm    Naf

Nausf    Nnwdaf    Namf    Nsmf

AUSF    NWDAF    AMF    SMF

N1    N2    N4

UE    RAN    N3    UPF    N6    DN

FIG. 1

RAN data

NWDAF

RAN

Service
experience data
analysis result

CN data

AF data

CN

AF

FIG. 2

Federated model

Model A

Model B

Model
training

Sample alignment

No data interaction

Client A

Client B

FIG. 3

| Dataset |
|---|

| Training set | Test set |
|---|---|

| Training set | Verification set | Test set |
|---|---|---|

Training,
adjustment,
evaluation

Machine learning
algorithm

Prediction model

FIG. 4

FIG. 5

(1) AF<->UPF: timestamp, IP 5-tuple

(2) SMF<->UPF: timestamp, UE IP

(3) SMF<->AMF: timestamp, SUPI

(4) PCF<->SMF: timestamp, SUPI

(5) RAN<->UPF: timestamp, AN tunnel information

(6) RAN<->AMF: timestamp, RAN UE NGAP ID, RAN globally unique identifier

**FIG. 6**

701 An NWDAF obtains first association information corresponding to a first dataset

702 The NWDAF obtains a second dataset based on the first association information

703 The NWDAF determines a fourth dataset based on first information and the second dataset

704 The NWDAF determines a service experience model of a service based on the fourth dataset

**FIG. 7**

```
┌──────────────┐        ┌──────────────┐        ┌──────────────┐
│     RAN      │        │    NWDAF     │        │  Data lake   │
└──────────────┘        └──────────────┘        └──────────────┘
```

┌─────────────────────┐                         ┌─────────────────────┐
│ 801a: The RAN       │                         │ 801b: The data lake │
│ collects and stores │                         │ collects and stores │
│ data of UE in an    │                         │ data of the UE in a │
│ access network      │                         │ core network        │
└─────────────────────┘                         └─────────────────────┘

802: Request message ──────────▶

◀────────── 803: Response message

┌────────────────────────────────────────────────┐
│ 804: The NWDAF performs data alignment          │
│ with the RAN device, to obtain a second         │
│ dataset                                         │
└────────────────────────────────────────────────┘

◀────────── 805a: Request message ──────────

── 805b: Capability information ▶

┌────────────────────────────────┐
│ 806: Determine a fourth        │
│ dataset based on capability    │
│ information of the RAN,        │
│ capability information of the  │
│ NWDAF, and a size of the       │
│ second dataset                 │
└────────────────────────────────┘

┌────────────────────────────────┐
│ 807: Divide the fourth         │
│ dataset into a training        │
│ dataset, a verification        │
│ dataset, and a test dataset    │
└────────────────────────────────┘

◀────────── 808: Configuration
            information

FIG. 8

```
┌──────────┐        ┌──────────┐              ┌──────────┐
│   RAN    │        │  NWDAF   │              │ Data lake│
└────┬─────┘        └────┬─────┘              └────┬─────┘
┌────┴─────┐             │                    ┌────┴──────┐
│901a: The RAN│          │                    │901b: The data lake│
│collects and stores│    │                    │collects and stores data│
│data of UE in an│       │                    │of the UE in a core│
│access network│         │                    │network│
└────┬─────┘             │                    └────┬──────┘
     │                   │── 902: Request message ──▶│
     │                   │◀── 903: Response message ──│
┌────┴──────────────────┴───────────────┐    │
│904: The NWDAF performs data alignment with│ │
│the RAN device, to obtain second association│ │
│information                              │    │
└────┬──────────────────┬───────────────┘    │
     │                   │── 905: Request message ──▶│
     │                   │◀── 906: Response message ──│
     │◀── 907a: Request message ──│        │
     │── 907b: Capability information ──▶│  │
     │          ┌────────┴────────┐       │
     │          │908: Determine a fourth│  │
     │          │dataset based on the│     │
     │          │capability information,│   │
     │          │capability information of the│
     │          │NWDAF, and a size of a│    │
     │          │second dataset│            │
     │          └────────┬────────┘         │
     │          ┌────────┴────────┐         │
     │          │909: Divide the fourth│    │
     │          │dataset into a training│   │
     │          │dataset, a verification│   │
     │          │dataset, and a test dataset│
     │          └────────┬────────┘         │
     │◀─ 910: Configuration information ─│  │
```

FIG. 9

| RAN | NWDAF | NRF | NWDAF N ... NWDAF 1 |
|---|---|---|---|

1001: The RAN collects and stores data of UE in an access network

1002: Collect and store data that is of the UE, that is related to the same RAN device, and that is in a core network

1003: Registration request

1004: Request message

1005: Response message

1006: Request message

1007: Response message

1008: Process data of the UE from different NWDAFs

1009: The NWDAF performs data alignment with the RAN, to obtain a second dataset

1010a: Request message

1010b: Capability information

1011: Determine a fourth dataset based on the capability information of the RAN, capability information of the NWDAF, and a size of the second dataset

1012: Divide the fourth dataset into a training dataset, a verification dataset, and a test dataset

1013: Configuration information

FIG. 10

1110          1120          1130

1100

```
┌─────────────┐   ┌─────────────┐   ┌─────────────┐
│ Association │   │   Dataset   │   │   Dataset   │
│ information │   │  obtaining  │   │ determining │
│  obtaining  │   │    unit     │   │    unit     │
│    unit     │   │             │   │             │
└─────────────┘   └─────────────┘   └─────────────┘
```

1140

1150

```
┌─────────────┐           ┌ ─ ─ ─ ─ ─ ─ ┐
│   Service   │             Transceiver
│ experience  │           │    unit     │
│   model     │
│ determining │           └ ─ ─ ─ ─ ─ ─ ┘
│    unit     │
└─────────────┘
```

FIG. 11

1210

```
        ┌─────────────┐
        │  Processor  │
        └─────────────┘
```

```
┌ ─ ─ ─ ─ ─ ┐       ┌─────────────┐
│  Memory   │       │  Interface  │
└ ─ ─ ─ ─ ─ ┘       └─────────────┘
```

1220          1230

FIG. 12

34

### INTERNATIONAL SEARCH REPORT

| International application No. |
| --- |
| **PCT/CN2020/141751** |

**A.    CLASSIFICATION OF SUBJECT MATTER**

H04W 28/02(2009.01)i;   H04W 28/24(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNPAT, WPI, EPODOC, CNKI, IEEE, 3GPP: 数据分析功能, 数据分析网元, NWDAF, 关联, 时间戳, 业务, 服务, 模型, network data analytics function, appropriat+, relat+, time stamp, service, model

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110972200 A (HUAWEI TECHNOLOGIES CO., LTD.) 07 April 2020 (2020-04-07) description paragraphs [0226]-[0248] | 1-34 |
| A | CN 110972193 A (HUAWEI TECHNOLOGIES CO., LTD.) 07 April 2020 (2020-04-07) entire document | 1-34 |
| A | US 2020358670 A1 (ELECTRONICS AND TELECOMMUNICATIONS RESEARCH INSTITUTE) 12 November 2020 (2020-11-12) entire document | 1-34 |
| A | WO 2019242664 A1 (HUAWEI TECHNOLOGIES CO., LTD.) 26 December 2019 (2019-12-26) entire document | 1-34 |
| A | CHINA MOBILE. "SA WG2 Meeting #138E S2-2004058" *KI #1, New Sol: NWDAF functionality Split,* 22 May 2020 (2020-05-22), section 2 | 1-34 |

☐ Further documents are listed in the continuation of Box C.          ☑ See patent family annex.

| | |
| --- | --- |
| *      Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
| --- | --- |
| **08 September 2021** | **28 September 2021** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/141751**

| Patent document cited in search report | | | Publication date (day/month/year) | Patent family member(s) | | | Publication date (day/month/year) |
|---|---|---|---|---|---|---|---|
| CN | 110972200 | A | 07 April 2020 | WO | 2020063963 | A1 | 02 April 2020 |
| CN | 110972193 | A | 07 April 2020 | CA | 3112926 | A1 | 02 April 2020 |
| | | | | WO | 2020063335 | A1 | 02 April 2020 |
| US | 2020358670 | A1 | 12 November 2020 | KR | 2020129053 | A | 17 November 2020 |
| WO | 2019242664 | A1 | 26 December 2019 | CN | 110620678 | A | 27 December 2019 |
| | | | | EP | 3800832 | A1 | 07 April 2021 |
| | | | | US | 2021105193 | A1 | 08 April 2021 |
| | | | | IN | 202047057468 | A | 08 January 2021 |

Form PCT/ISA/210 (patent family annex) (January 2015)